# EUROPEAN PATENT APPLICATION

(11) **EP 4 730 521 A1**
(43) Date of publication of application: **22.04.2026**
(21) Application number: 23941119.2
(22) Date of filing: 16.06.2023
(51) Int. Cl.: H01M 50/244, H01M 50/59, H01M 50/24

(54) **BATTERY MODULE AND MANUFACTURING METHOD THEREFOR, BATTERY PACK, AND ELECTRIC DEVICE**

(71) Applicant: Xiamen Ampack Technology Limited, Xiamen City, Fujian Province 361000 (CN)
(72) Inventor: PENG, Fanggui, Xiamen, Fujian 361000 (CN); WU, Mingjie, Xiamen, Fujian 361000 (CN); NONG, Wenbin, Xiamen, Fujian 361000 (CN)
(74) Representative: Kraus & Lederer PartGmbB
(86) International application number: PCT/CN2023/100872
(87) International publication number: WO 2024/254886

(57) **Abstract**

This application discloses a battery module and a manufacturing method thereof, a battery pack, and an electric device. The battery module includes a cell assembly, a first component, a first insulation member, and a second component. The cell assembly includes a plurality of cells, and each cell includes a cell housing and an electrode terminal, the electrode terminal extends out from the cell housing. The cell assembly and the first component are arranged along a first direction, the first component has a first recess, and a portion of each electrode terminal is disposed in the first recess. At least a portion of the first insulation member is disposed in a gap between the electrode terminal and the first component. The second component is provided with a first through hole, and the second component and the first component are arranged along the first direction. The first recess includes a first opening facing the second component, and along the first direction, a projection of the first through hole overlaps with a projection of the first opening. With the first insulation member disposed in the gap between the electrode terminal and the first component, the sealing and insulation protection for the electrode terminal is enhanced, thereby enhancing the sealing and insulation protection for the battery module.

## Description

### TECHNICAL FIELD

This application relates to the field of energy storage technology, and in particular, to a battery module and a manufacturing method thereof, a battery pack, and an electric device.

### BACKGROUND

Currently, battery packs are widely used in fields such as drones, electric vehicles, and intelligent energy storage devices. Electric devices may be used outdoors, requiring enhanced sealing and insulation protection for battery packs.

### SUMMARY

In view of this, it is necessary to provide a battery module and a manufacturing method thereof, a battery pack, and an electric device, so as to enhance the sealing and insulation protection for the battery module and the battery pack.

An embodiment of this application provides a battery module including a cell assembly, a first component, a first insulation member, and a second component. The cell assembly includes a plurality of cells, and each cell includes a cell housing and an electrode terminal, the electrode terminal led out from the cell housing. The cell assembly and the first component are arranged along a first direction, the first component has a first recess, and a portion of each electrode terminal is disposed in the first recess. At least a portion of the first insulation member is disposed in a gap between the electrode terminal and the first component. The second component is provided with a first through hole, and the second component and the first component are arranged along the first direction. The first recess includes a first opening facing the second component, and along the first direction, a projection of the first through hole overlaps with a projection of the first opening. In this application, a portion of each electrode terminal is disposed in the first recess, and the first insulation member is disposed in the gap between the electrode terminal and the first component, enhancing the sealing and insulation protection for the electrode terminal, thereby enhancing the sealing and insulation protection for the battery module.

Optionally, in some embodiments of this application, the second component includes a top wall and a protrusion, where the first through hole extends through the protrusion. Along the first direction, the protrusion extends away from the top wall. Along the first direction, a first space is provided between the top wall and the first opening. During injection of the first insulating material, an external device enters through the first through hole, and the first space can provide space for the external device, facilitating the entry of the external device and reducing the risk of the external device damaging components within the first recess.

Optionally, in some embodiments of this application, the protrusion is located outside the first recess, reducing the occupancy of the first recess by the protrusion and reducing the length of the external device extending into the first recess, further reducing the risk of the external device damaging components within the first recess.

Optionally, in some embodiments of this application, the first through hole is located outside the first recess, allowing the external device to pass through the first through hole to enter the first recess.

Optionally, in some embodiments of this application, the first through hole and the first insulation member are spaced apart from each other, facilitating connection of the first fastener to the first through hole.

Optionally, in some embodiments of this application, a first insulation member is disposed in the first through hole. The first through hole can be sealed through the first insulation member, reducing the entry of impurities such as dust into the first recess through the first through hole.

Optionally, in some embodiments of this application, in a third direction, a length of the second component is greater than a length of the plurality of stacked cells, and two ends of the second component extend out of the cell assembly, which facilitates arrangement of the protrusion so that the protrusion is located outside the first recess.

Optionally, in some embodiments of this application, each cell includes an electrode assembly, and the cell housing includes a main body portion and a sealing portion, the electrode assembly is disposed in the main body portion. The sealing portion includes a first sealing portion, the electrode terminal is connected to the electrode assembly and led out from the first sealing portion, and at least a portion of each first sealing portion is located in the first recess. The first insulation member wraps the portion of each first sealing portion, enhancing the sealing and insulation protection for the first sealing portion.

Optionally, in some embodiments of this application, the second component and the plurality of cells are arranged in the second direction, and along the first direction, the protrusion extends beyond the main body portion, reducing the influence of the protrusion on heat dissipation of the main body portion and facilitating heat dissipation. The first direction is perpendicular to the second direction.

Optionally, in some embodiments of this application, along a third direction, the projection of the first through hole and a projection of the first sealing portion are spaced apart from each other, the first direction is perpendicular to the third direction. This can reduce the risk of the external device extending through the first through hole and damaging the first sealing portion.

Optionally, in some embodiments of this application, the cell assembly includes a first group of cells and a second group of cells, the first group of cells and the second group of cells are arranged along a second direction, and the second component is located between the first group of cells and the second group of cells. The first group of cells includes at least two cells stacked along the third direction, and the second group of cells includes at least two cells stacked along the third direction. The first direction, the second direction, and the third direction are perpendicular to each other. Along the second direction, at least a portion of the protrusion is located between the first sealing portion of the first group of cells and the first sealing portion of the second group of cells. This can reduce the risk of the external device extending through the first through hole and damaging the first sealing portion.

Optionally, in some embodiments of this application, the battery module further includes a third component, and the electrode terminal runs through the third component and is connected to a side of the third component, the side of the third component being side facing away from the cell housing. The first insulation member covers at least a portion of the third component, providing sealing and insulation protection for the third component.

Optionally, in some embodiments of this application, the electrode terminal, the third component, and the first component are bonded by the first insulation member.

Optionally, in some embodiments of this application, the battery module further includes a first limiting portion. The first component includes a base portion, the first limiting portion is connected to a side of the base portion, the side of the base portion being a side facing away from the third component, and the first limiting portion includes a second opening. The first component includes a second through hole, and the second through hole extends through the base portion. The battery module further includes a conductive assembly, the conductive assembly is connected to the third component, and the conductive assembly is led out from the second opening and the second through hole.

Optionally, in some embodiments of this application, the battery module further includes a second insulation member, and at least a portion of the second insulation member is disposed in a gap between the conductive assembly and the first limiting portion, providing sealing and insulation protection for a portion of the conductive assembly.

Optionally, in some embodiments of this application, before the second insulation member is disposed in the gap, the second through hole communicates with the second opening; and after the second insulation member is disposed in the gap, the second through hole is isolated from the second opening through the second insulation member.

Optionally, in some embodiments of this application, a second limiting portion is further included, the second limiting portion is connected to a side of the base portion, the side of the base portion being a side facing the third component, and the second limiting portion includes a third opening. The conductive assembly is led out from the third opening, the second through hole, and the second opening. At least a portion of the second insulation member is disposed in a gap between the second limiting portion and the conductive assembly, providing sealing and insulation protection for the conductive assembly located in the second limiting portion.

Optionally, in some embodiments of this application, the battery module further includes a third insulation member, the third insulation member is configured to be formed by curing a third insulating material disposed in the first limiting portion and the second limiting portion. The third insulation member is partially located in the second limiting portion, partially located in the first limiting portion, and partially located in the second through hole. A viscosity of the third insulating material is greater than that of the second insulating material, helping to enhance waterproof performance of the conductive assembly. After the third insulating material is cured to form the third insulation member, the second insulating material is injected into the first limiting portion, and the second insulating material is cured to form the second insulating material.

Optionally, in some embodiments of this application, the battery module includes a first sealing member, and along the first direction, the first sealing member is located between the third component and the second limiting portion, to isolate the first recess and the third opening, further reducing the entry of the second insulating material into the first recess.

Optionally, in some embodiments of this application, an outer surface of the first component is insulative, reducing the risk of short circuits.

Optionally, in some embodiments of this application, the first component includes a base portion and four first side walls, and the base portion and the four first side walls enclose the first recess.

Optionally, in some embodiments of this application, the first opening is formed at an end of the four first side walls facing away from the base portion.

Optionally, in some embodiments of this application, the first insulation member is configured to be formed by curing a first insulating material.

Optionally, in some embodiments of this application, the first through hole is configured to provide the first insulating material to the first recess through the first through hole to form the first insulation member, facilitating the arrangement of the first insulation member.

Optionally, in some embodiments of this application, the second component is a heat dissipation member, the heat dissipation member includes a first heat dissipation channel, and the first heat dissipation channel is in communication with the outside, facilitating heat dissipation.

Optionally, in some embodiments of this application, the first through hole and the first heat dissipation channel are spaced apart from each other, which reduces interference between the first through hole and the first heat dissipation channel, allowing the external device to enter the first recess through the first through hole.

Optionally, in some embodiments of this application, along a direction opposite to the first direction, the first recess is facing the cell assembly.

Another embodiment of this application provides a battery module including a cell assembly, a first component, a first insulation member, and a second component. The cell assembly includes a plurality of cells, and each cell includes a cell housing and an electrode terminal, the electrode terminal extends out from the cell housing. The cell assembly and the first component are arranged along a first direction, the first component has a first recess, and a portion of each electrode terminal is disposed in the first recess. At least a portion of the first insulation member is disposed in a gap between the electrode terminal and the first component. The second component is provided with a first through hole, and the second component and the first component are arranged along the first direction. The second component includes a top wall and a protrusion, the protrusion extends away from the top wall, and the first through hole extends through the protrusion. Along the first direction, the protrusion extends away from the top wall. The first recess includes a first opening facing the second component. Along the first direction, a first space is provided between the top wall and the first opening, and when viewed along a third direction, at least a portion of the first through hole is located within the first space, the third direction is perpendicular to the first direction.

In this application, a portion of each electrode terminal is disposed in the first recess, and the first insulation member is disposed in the gap between the electrode terminal and the first component, enhancing the sealing and insulation protection for the battery module. Moreover, the first through hole is disposed in the protrusion, and the first insulation member is disposed in the first recess through the first through hole, which can reduce the arrangement of other channel structures in the battery module, thereby reducing structural restrictions in the battery module.

Optionally, in some embodiments of this application, along the third direction, the projection of the first through hole overlaps with a projection of the first space.

Optionally, in some embodiments of this application, in the first direction, the projection of the first through hole along the third direction is located between a projection of the top wall along the third direction and a projection of the first recess along the third direction.

Optionally, in some embodiments of this application, the protrusion is located outside the first recess, reducing the occupancy of the first recess by the protrusion and reducing the length of the external device extending into the first recess, further reducing the risk of the external device damaging components within the first recess.

Optionally, in some embodiments of this application, the first through hole is located outside the first recess, allowing the external device to pass through the first through hole to enter the first recess.

Optionally, in some embodiments of this application, the first through hole and the first insulation member are spaced apart from each other, facilitating connection of the first fastener to the first through hole.

Optionally, in some embodiments of this application, a first insulation member is disposed in the first through hole. The first through hole can be sealed through the first insulation member, reducing the entry of impurities such as dust into the first recess through the first through hole.

Optionally, in some embodiments of this application, in a third direction, a length of the second component is greater than a length of the multiple stacked cells, and two ends of the second component extend out of the cell assembly, which facilitates arrangement of the protrusion so that the protrusion is located outside the first recess.

Optionally, in some embodiments of this application, each cell includes an electrode assembly, and the cell housing includes a main body portion and a sealing portion, the electrode assembly is disposed in the main body portion. The sealing portion includes a first sealing portion, the electrode terminal is connected to the electrode assembly and led out from the first sealing portion, and at least a portion of each first sealing portion is located in the first recess. The first insulation member wraps the portion of each first sealing portion, enhancing the sealing and insulation protection for the first sealing portion.

Optionally, in some embodiments of this application, the second component and the plurality of cells are arranged in the second direction, and along the first direction, the protrusion extends beyond the main body portion, reducing the influence of the protrusion on heat dissipation of the main body portion and facilitating heat dissipation. The first direction is perpendicular to the second direction.

Optionally, in some embodiments of this application, along a third direction, the projection of the first through hole and a projection of the first sealing portion are spaced apart from each other, the first direction is perpendicular to the third direction. This can reduce the risk of the external device extending through the first through hole and damaging the first sealing portion.

Optionally, in some embodiments of this application, the cell assembly includes a first group of cells and a second group of cells, the first group of cells and the second group of cells are arranged along a second direction, and the second component is located between the first group of cells and the second group of cells. The first group of cells includes at least two cells stacked along the third direction, and the second group of cells includes at least two cells stacked along the third direction. The first direction, the second direction, and the third direction are perpendicular to each other. Along the second direction, at least a portion of the protrusion is located between the first sealing portion of the first group of cells and the first sealing portion of the second group of cells. This can reduce the risk of the external device extending through the first through hole and damaging the first sealing.

Optionally, in some embodiments of this application, the battery module further includes a third component, and the electrode terminal runs through the third component and is connected to a side of the third component, the side of the third component being a side facing away from the cell housing. The first insulation member covers at least a portion of the third component, providing sealing and insulation protection for the third component.

Optionally, in some embodiments of this application, the electrode terminal, the third component, and the first component are bonded by the first insulation member.

Optionally, in some embodiments of this application, the battery module further includes a first limiting portion. The first component includes a base portion, the first limiting portion is connected to a side of the base portion, the side of the base portion being a side facing away from the third component, and the first limiting portion includes a second opening. The first component includes a second through hole, and the second through hole extends through the base portion. The battery module further includes a conductive assembly, the conductive assembly is connected to the third component, and the conductive assembly is led out from the second opening and the second through hole.

Optionally, in some embodiments of this application, the battery module further includes a second insulation member, and at least a portion of the second insulation member is disposed in a gap between the conductive assembly and the first limiting portion, providing sealing and insulation protection for a portion of the conductive assembly.

Optionally, in some embodiments of this application, before the second insulation member is disposed in the gap, the second through hole communicates with the second opening; and after the second insulation member is disposed in the gap, the second through hole is isolated from the second opening through the second insulation member.

Optionally, in some embodiments of this application, a second limiting portion is further included, the second limiting portion is connected to a side of the base portion, the side of the base portion being a side facing the third component, and the second limiting portion includes a third opening. The conductive assembly is led out from the third opening, the second through hole, and the second opening. At least a portion of the second insulation member is disposed in a gap between the second limiting portion and the conductive assembly, providing sealing and insulation protection for the conductive assembly located in the second limiting portion.

Optionally, in some embodiments of this application, the battery module further includes a third insulation member, the third insulation member is configured to be formed by curing a third insulating material disposed in the first limiting portion and the second limiting portion. The third insulation member is partially located in the second limiting portion, partially located in the first limiting portion, and partially located in the second through hole. A viscosity of the third insulating material is greater than that of the second insulating material, helping to enhance waterproof performance of the conductive assembly. After the third insulating material is cured to form the third insulation member, the second insulating material is injected into the first limiting portion, and the second insulating material is cured to form the second insulating material.

Optionally, in some embodiments of this application, the battery module includes a first sealing member, and along the first direction, the first sealing member is located between the third component and the second limiting portion, to isolate the first recess and the third opening, further reducing the entry of the second insulating material into the first recess.

Optionally, in some embodiments of this application, an outer surface of the first component is insulative, reducing the risk of short circuits.

Optionally, in some embodiments of this application, the first component includes a base portion and four first side walls, and the base portion and the four first side walls enclose the first recess.

Optionally, in some embodiments of this application, the first opening is formed at an end of the four first side walls facing away from the base portion.

Optionally, in some embodiments of this application, the first insulation member is configured to be formed by curing a first insulating material.

Optionally, in some embodiments of this application, the first through hole is configured to provide the first insulating material to the first recess through the first through hole to form the first insulation member, facilitating the arrangement of the first insulation member.

Optionally, in some embodiments of this application, the second component is a heat dissipation member, the heat dissipation member includes a first heat dissipation channel, and the first heat dissipation channel is in communication with the outside, facilitating heat dissipation.

Optionally, in some embodiments of this application, the first through hole and the first heat dissipation channel are spaced apart from each other, which reduces interference between the first through hole and the first heat dissipation channel, allowing the external device to pass through the first through hole to enter the first recess.

Optionally, in some embodiments of this application, along a direction opposite to the first direction, the first recess is facing the cell assembly.

Another embodiment of this application provides a battery module, including a cell assembly, a first component, a third component, a second limiting portion, a conductive assembly, and a second insulation member. The cell assembly includes a plurality of cells, and each cell includes a cell housing and an electrode terminal, the electrode terminal extends out from the cell housing. The third component includes a first hole and a second hole, the electrode terminal runs through the first hole and the second hole, and the cell housing and the third component are arranged along the first direction. The outer surface of the first component is provided with an insulating material, the first component includes a base portion, the base portion is disposed on a side of the third component, the side of the third component being a side facing away from the cell housing, and along the first direction, the first component includes a second through hole extending through the base portion. The second limiting portion is disposed on a side of the base portion, the side of the base portion being a side facing the cell housing, and the second limiting portion includes a third opening. The conductive assembly is connected to the cell assembly, a portion of the conductive assembly is disposed in the second limiting portion, and the conductive assembly is led out from the third opening and the second through hole. At least a portion of the second insulation member is disposed in a gap between the second limiting portion and the conductive assembly.

The second insulation member is configured to be formed by curing a second insulating material disposed in the gap between the conductive assembly and the second limiting portion. The second limiting portion can limit the overflow of the second insulating material from the second limiting portion. The insulation and fixation of the conductive assembly 110 is enhanced through the second insulation member 90, further improving the safety performance of the battery module 100.

An embodiment of this application provides a battery pack including the battery module according to any one of the above embodiments, where the battery pack includes a housing and a top cover, the housing and the top cover form an accommodating space, and the battery module is located in the accommodating space, enhancing the sealing and insulation protection for the battery pack.

Optionally, in some embodiments of this application, the battery pack further includes a second circuit board, and the second circuit board is electrically connected to the cell assembly.

Optionally, in some embodiments of this application, the cell assembly and the top cover are arranged along the first direction. Along the first direction, the second component does not extend beyond the housing.

Optionally, in some embodiments of this application, the battery pack further includes a first fastener, the housing is provided with a first fixing hole, and the first fastener is disposed in the first fixing hole and the first through hole, reducing the entry of impurities such as dust into the first recess through the first through hole and implementing connection of the second component to the housing front wall.

Optionally, in some embodiments of this application, the battery pack includes a sealing member, and the sealing member is disposed in the first through hole, reducing the entry of impurities such as dust into the first recess through the first through hole.

An embodiment of this application further provides an electric device including the battery pack according to any one of the foregoing embodiments.

An embodiment of this application further provides a method for manufacturing the battery module according to any one of the above embodiments, including the following steps: connecting the cell assembly, the second component, and the first component; and inverting the battery module, injecting the first insulating material into the first recess through the first through hole, and curing the first insulating material to form the first insulation member.

In this application, the first insulation member is disposed in the first recess through the first through hole, facilitating the injection of the first insulating material into the first recess.

### BRIEF DESCRIPTION OF DRAWINGS

FIG. 1 is a schematic diagram of a partial structure of a battery module according to some embodiments.
FIG. 2 is a schematic diagram of a partial structure of a battery module from another perspective according to some embodiments.
FIG. 3 is an exploded view of a partial structure of the battery module shown in FIG. 1.
FIG. 4 is a schematic structural diagram of a cell according to some embodiments.
FIG. 5 is a schematic exploded view of a cell according to some embodiments.
FIG. 6 is an exploded view of a cell and a heat conducting member according to some embodiments.
FIG. 7 is a schematic structural diagram of a cell and a heat conducting member according to some embodiments.
FIG. 8 is a schematic diagram of a partial structure of a battery module according to some embodiments.
FIG. 9 is a schematic structural diagram of a third component and a conductive assembly according to some embodiments of this application.
FIG. 10 is a schematic cross-sectional view of a partial structure of the battery module along II-II according to the embodiment shown in FIG. 1.
FIG. 11 is an enlarged view of part B in the embodiment shown in FIG. 10.
FIG. 12 is a schematic cross-sectional view of a partial structure of the battery module along III-III according to the embodiment shown in FIG. 2.
FIG. 13 is a schematic cross-sectional view of a partial structure of the battery module along IV-IV according to the embodiment shown in FIG. 2.
FIG. 14 is an enlarged view of part C in the embodiment shown in FIG. 13.
FIG. 15 is a schematic cross-sectional view of a partial structure of the battery module along V-V according to the embodiment shown in FIG. 2.
FIG. 16 is a schematic diagram of a partial structure of a battery pack from another perspective.
FIG. 17 is a schematic cross-sectional view of a partial structure of the inverted battery pack along VI-VI according to the embodiment shown in FIG. 16.
FIG. 18 is a schematic structural diagram of a partial structure of a battery module when viewed from a third direction Z, where a first insulating material is not disposed in a first recess.
FIG. 19 is a schematic diagram of a partial structure of the battery module according to another embodiment shown in FIG. 17.
FIG. 20 is an enlarged view of part E according to the embodiment shown in FIG. 19.
FIG. 21 is a schematic structural diagram of a first component according to some embodiments.
FIG. 22 is a schematic structural diagram of a first component from another perspective according to some embodiments.
FIG. 23 is a schematic structural diagram of a second component according to some embodiments.
FIG. 24 is a schematic structural diagram of a second component from another perspective according to some embodiments.
FIG. 25 is a schematic cross-sectional view of a partial structure of the battery module along VII-VII according to the embodiment shown in FIG. 23.
FIG. 26 is a schematic structural diagram of a battery pack according to some embodiments.
FIG. 27 is a schematic structural diagram of a battery pack from another perspective according to some embodiments.
FIG. 28 is an exploded view of a battery pack according to some embodiments.
FIG. 29 is a schematic diagram of a partial structure of a battery pack according to some embodiments.
FIG. 30 is a schematic diagram of a partial structure of a battery pack from another perspective according to some embodiments.
FIG. 31 is a schematic diagram of a partial structure of a housing according to some embodiments.
FIG. 32 is a flowchart of a direction for manufacturing a battery module according to some embodiments.
FIG. 33 is a schematic structural diagram of an electric device according to some embodiments.

Reference signs of main components:
battery module 100, first fastener 100a, second heat-conducting adhesive 100b, insulator 100c, cell assembly 20, cell 21, cell housing 211, main body portion 211a, first housing 2111, first housing recess 2111a, second housing 2112, second housing recess 2112a, first extension side 2113, second extension side 2114, main body left wall 2101, main body right wall 2102, main body bottom wall 2103, main body top wall 2104, main body front wall 2105, main body rear wall 2106, sealing portion 211b, first sealing portion 2115, second sealing portion 2116, electrode terminal 212, connection region 212a, electrode assembly 213, first component 30, first recess 301, first opening 301a, first space 301b, second opening 302, third opening 303, fourth opening 304, fifth opening 305, sixth opening 306, seventh opening 307, third gap 30a, Base portion 31, connecting protrusion 311, second through hole 312, third through hole 313, fourth through hole 314, first side wall 32, first limiting portion 33, first connection wall 331,
second connection wall 332, third connection wall 333, fourth connection wall 334, second limiting portion 34, third limiting portion 35, fourth limiting portion 36, fifth limiting portion 37, sixth limiting portion 38, second component 40, first heat dissipation channel 40a, protrusion 40b, first through hole 401,
front wall 41, second open hole 411, rear wall 42, fourth open hole 421, Top wall 43, protrusion 44, bottom wall 45, left wall 46, right wall 47,
first insulation member 50,
heat conducting member 60, first portion 61, second portion 62, first gap 62a, third portion 63, second gap 63a,
third component 70, first hole 71, second hole 72, first conductive sheet 73, second conductive sheet 74, third hole 75, fourth hole 76,
second insulation member 90, fourth insulation member 91, fifth insulation member 92,
conductive assembly 110, first connecting portion 110a, wire 110b, first section 1101, first segment 1101a, second segment 1101b, second section 1102, second connecting portion 110c,
first electrical connection member 120, first conductive portion 120a, first insulating portion 120b,
second electrical connection member 130, second conductive portion 130a, second insulating portion 130b, first sealing member 140,
battery pack 200, second circuit board 210, first fixing member 220, first elastic member 230, second elastic member 240,
housing 10, first housing opening 10a, second housing opening 10b, housing opening 101, housing front wall 11, first open hole 111, first fixing hole 112,
housing rear wall 12, third open hole 121,
housing left wall 13, first heat sink 131,
housing right wall 14, second heat sink 141,
housing bottom wall 15,
top cover 16, third heat sink 161,
bracket 17,
first direction X, second direction Y, third direction Z,

This application is further described with reference to the accompanying drawings in the following specific embodiments.

### DESCRIPTION DESCRIPTION OF EMBODIMENTS

The following specific embodiments are exemplary and not restrictive, aiming to provide a basic understanding of this application but not to confirm critical or decisive elements of this application and not to limit the scope of protection. As long as there is no structural conflict, the various technical features mentioned in various embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It should be understood that the terms "perpendicular" and "equal to" are used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The terms "perpendicular", "horizontal", "left", "right", "top", "bottom", "front", "rear", and similar expressions used herein are for illustrative purposes only and are not intended to limit this application.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

In a first direction X, the first direction X and a direction opposite to the first direction X are present. In a second direction Y, the second direction Y and a direction opposite to the second direction Y are present. In a third direction Z, the third direction Z and a direction opposite to the third direction Z are present.

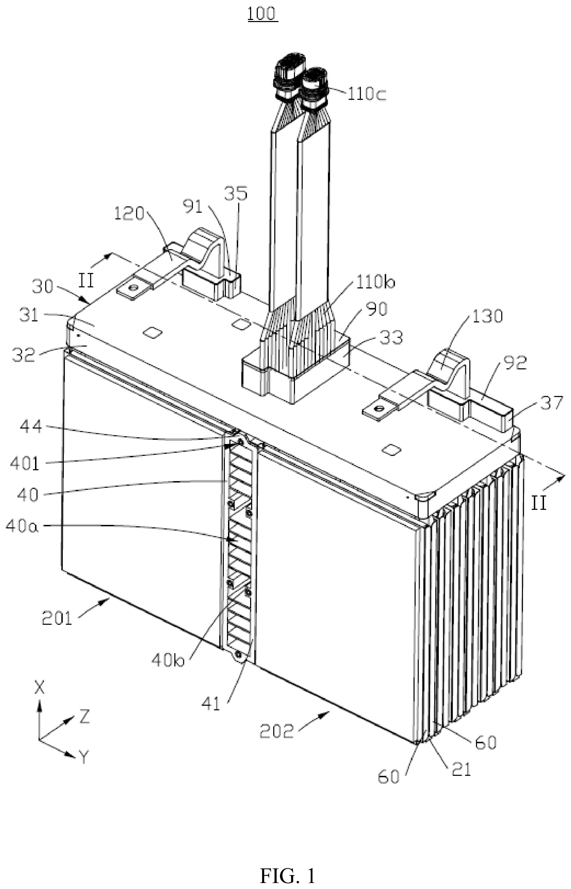

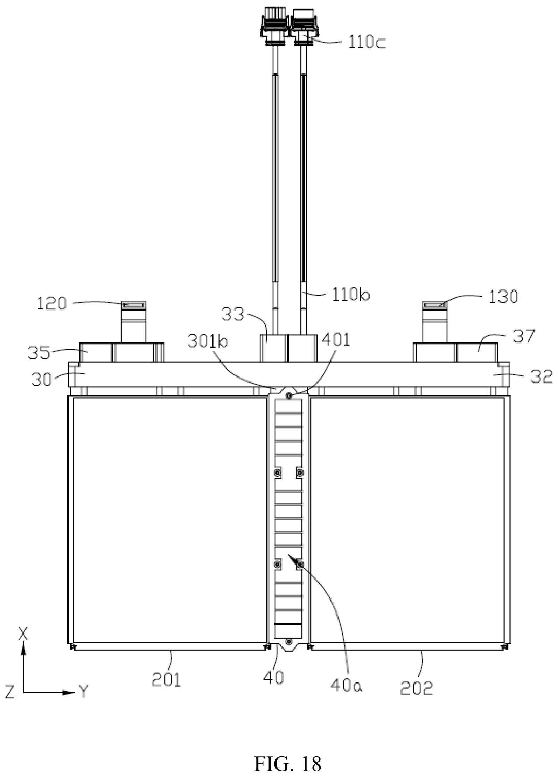

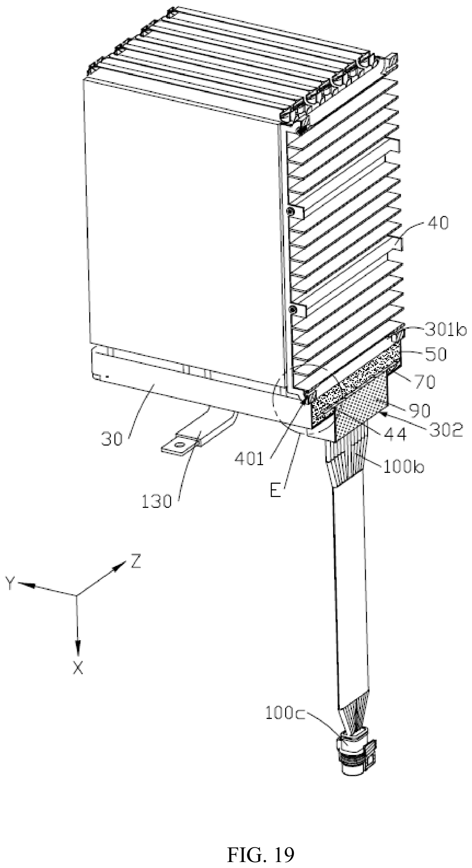

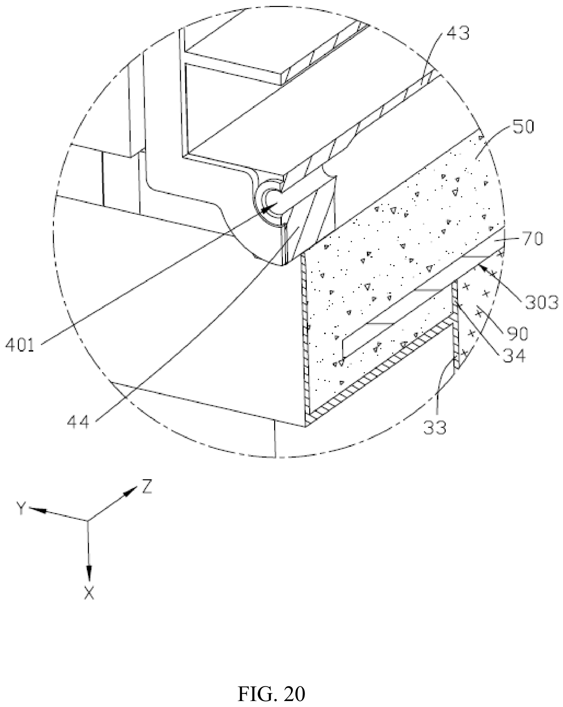

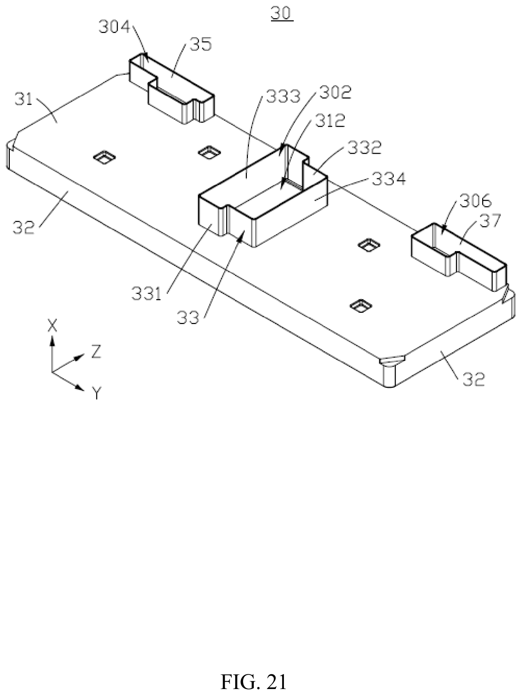

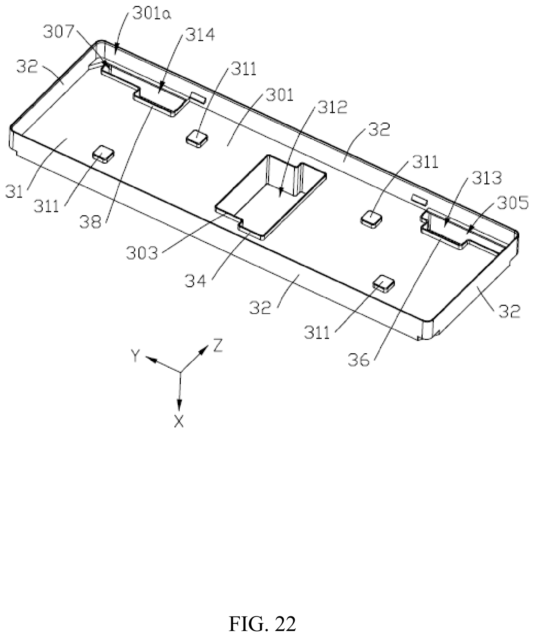

Referring to FIGs. 1 to 3 and FIGs. 17 to 22, an embodiment of this application provides a battery module 100 including a cell assembly 20, a first component 30, a second component 40, and a first insulation member 50. The cell assembly 20 includes a plurality of cells 21, and each cell 21 includes a cell housing 211 and an electrode terminal 212, the electrode terminal 212 extends out from the cell housing 211. The cell housing 211 and the first component 30 are arranged along a first direction X, the first component 30 has a first recess 301, and a portion of each electrode terminal 212 is disposed in the first recess 301. At least a portion of the first insulation member 50 is disposed in a gap between the electrode terminal 212 and the first component 30. The second component 40 is provided with a first through hole 401, the second component 40 and the first component 30 are arranged along the first direction X, the first recess 301 includes a first opening 301a facing the second component 40, and along the first direction X, a projection of the first through hole 401 overlaps with a projection of the first opening 301a.

In this application, a portion of each electrode terminal 212 is disposed in the first recess 301, and the first insulation member 50 is disposed in the gap between the electrode terminal 212 and the first component 30, enhancing the sealing and insulation protection for the electrode terminal 212, thereby enhancing the sealing and insulation protection for the battery module 100.

In some embodiments, the first insulation member 50 is configured to be formed by curing a first insulating material.

In some embodiments, the first insulating material includes one of polyurethane adhesive, epoxy adhesive, and silicone adhesive. Optionally, the first insulating material includes a potting adhesive. Optionally, the first insulating material includes a foam adhesive.

In some embodiments, the first through hole 401 is configured to provide the first insulating material to the first recess 301 through the first through hole 401 to form the first insulation member 50.

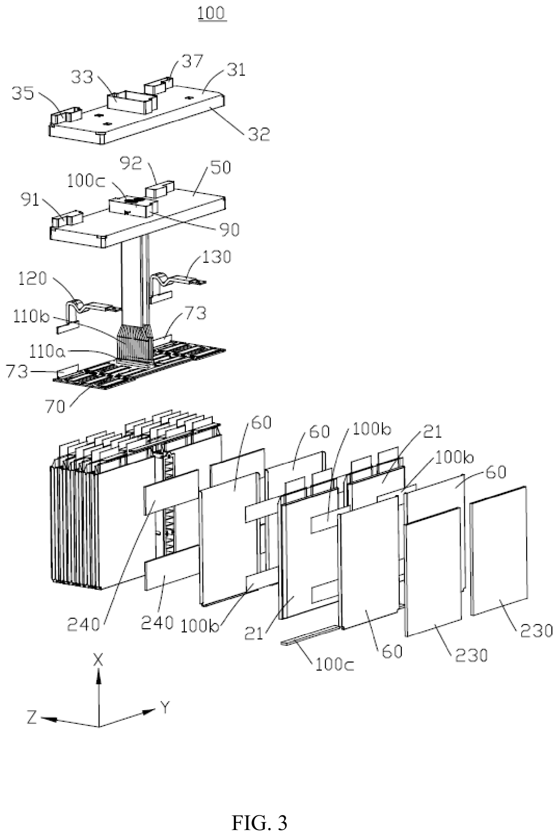

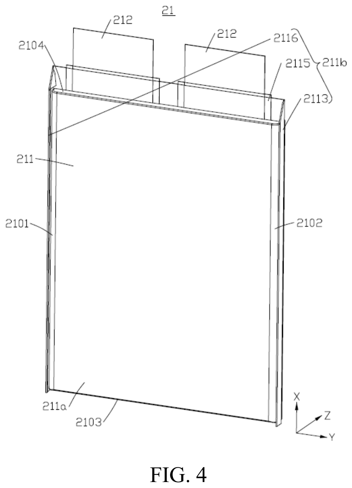

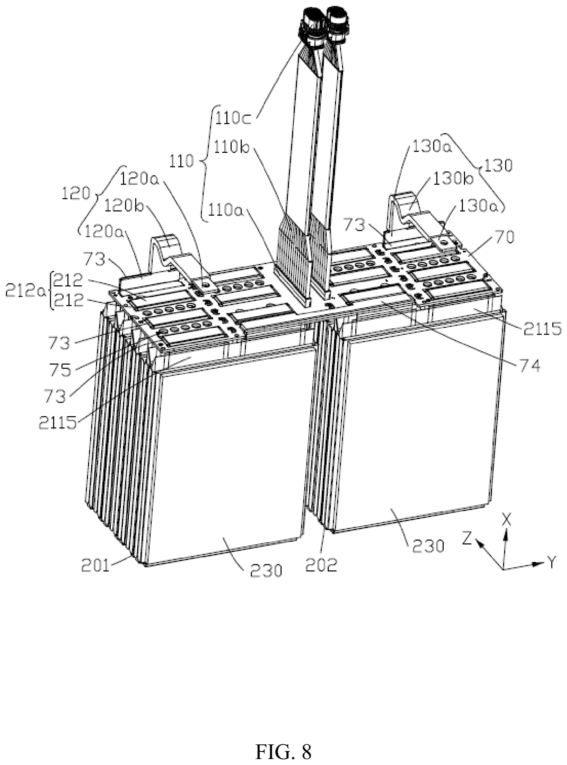

Referring to FIG. 3, FIG. 4, and FIG. 8, each cell 21 includes an electrode assembly 213, the electrode assembly 213 is disposed in the cell housing 211, and the electrode terminal 212 is connected to the cell housing 211 and extends out from the cell housing 211. Adjacent electrode terminals 212 are connected to form a connection region 212a.

In some embodiments, the cell 21 includes a pouch cell. The cell housing 211 includes a main body portion 211a and a sealing portion 211b. The main body portion 211a is provided with an accommodating space, the cell housing 211 includes a first housing 2111 and a second housing 2112, the first housing 2111 is provided with a first housing recess 2111a, and the second housing 2112 is provided with a second housing recess 2112a. The first housing 2111 is connected to the second housing 2112 to form the accommodating space. The electrode assembly 213 is partially disposed in the first housing recess 2111a and partially disposed in the second housing recess 2112a. A periphery of the first housing 2111 extends outward to form a first extension side 2113, and a periphery of the second housing 2112 extends outward to form a second extension side 2114. After the first housing 2111 is connected to the second housing 2112, the first extension side 2113 and the second extension side 2114 coincide and are sealingly connected to form the sealing portion 211b.

In some embodiments, in an embodiment, the main body portion 211a is provided with an accommodating space, the main body portion 211a includes a first housing 2111 and a second housing 2112, the first housing 2111 is provided with a first housing recess 2111a, and the second housing 2112 is flat. The first housing 2111 is connected to the second housing 2112 to form the accommodating space. The electrode assembly 213 is disposed in the first housing recess 2111a.

In some embodiments, the sealing portion 211b includes a first sealing portion 2115 and two second sealing portions 2116, the first sealing portion 2115 connects the two second sealing portions 2116, and the two second sealing portions 2116 are arranged along the second direction Y. The electrode terminal 212 extends from the first sealing portion 2115. The second direction is perpendicular to the first direction.

In some embodiments, the main body portion 211a includes a main body left wall 2101, a main body right wall 2102, a main body bottom wall 2103, and a main body top wall 2104. One of the second sealing portions 2116 is connected to the main body left wall 2101, and the other second sealing portion 2116 is connected to the main body right wall 2102, and the first sealing portion 2115 is connected to the main body top wall 2104.

In some embodiments, Referring to FIG, the second component 40 is a heat dissipation member, the heat dissipation member includes a first heat dissipation channel 40a, and the first heat dissipation channel 40a is in communication with the outside, facilitating heat dissipation of the cell assembly 20.

In some embodiments, the second component 40 includes a front wall 41 and a rear wall 42 arranged along the third direction Z. Along the third direction Z, the first heat dissipation channel 40a extends through the front wall 41 and the rear wall 42. The first direction, the second direction, and the third direction are perpendicular to each other.

In some embodiments, the battery module 100 can use a cooling medium, and the cooling medium carry away heat when passing through the first heat dissipation channel 40a. Optionally, the cooling medium includes air and liquid. Optionally, the liquid may be liquid from the external environment, such as rain.

The cooling medium being air is used as an example. In some embodiments, the battery module 100 may be used in a static device, and when the battery module 100 is static, natural wind or an external air-cooling device, such as a fan, may be used for heat dissipation. Optionally, the battery module 100 may be used in a dynamic device, such as a drone or an electric assist vehicle. Since the air flows faster as the device moves, rapid heat dissipation of the battery module 100 can be implemented.

It can be understood that according to the moving direction of the battery module 100, a side where the front wall 41 is located can serve as an air inlet or an air outlet. When the side where the front wall 41 is located can serve as an air inlet, a side where the rear wall 42 is located serves as an air outlet. When the front wall 41 can serve as an air outlet, the rear wall 42 serves as an air inlet.

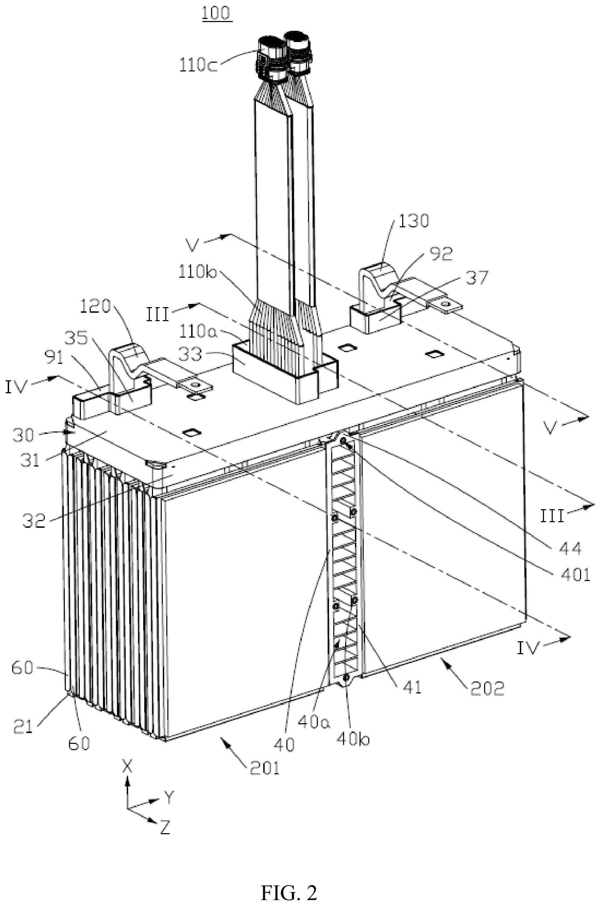

Referring to FIG. 2, in some embodiments, the cell assembly 20 includes a first group of cells 201 and a second group of cells 202, the first group of cells 201 includes at least two cells 21 stacked along the third direction Z, and the second group of cells 202 includes at least two cells 21 stacked along the third direction Z. The first group of cells 201 and the second group of cells 202 are arranged along the second direction Y, and the second component 40 is disposed between the first group of cells 201 and the second group of cells 202, facilitating heat dissipation of the first group of cells 201 and the second group of cells 202.

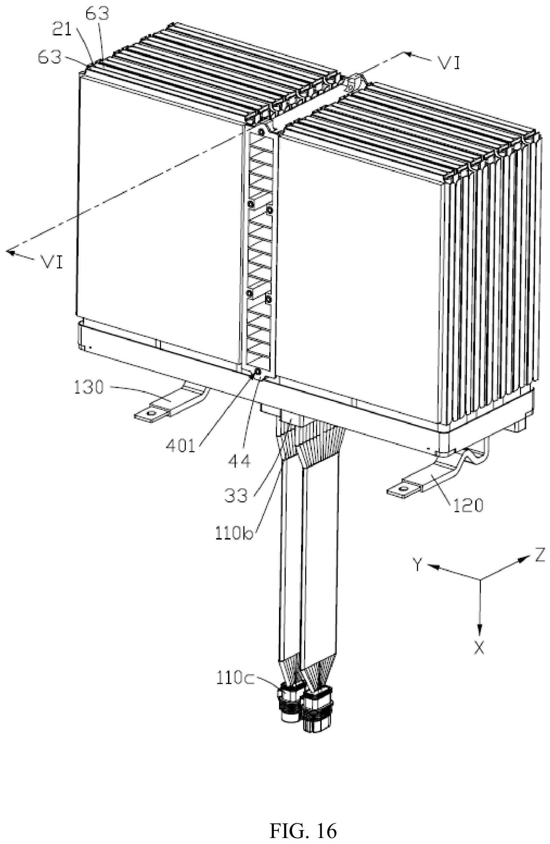

Referring to FIGs. 16 to 23, in some embodiments, the second component 40 includes a top wall 43 and a protrusion 44, and the top wall 43 is connected to the front wall 41 and the rear wall 42. Along the first direction X, the protrusion 44 extends away from the top wall 43. The first through hole 401 extends through the protrusion 44 along the third direction Z. Along the first direction X, a first space 301b is provided between the top wall 43 and the first opening 301a. The first through hole 401 communicates with the first recess 301 through the first space 301b. In injecting the first insulating material, an external device enters the first space 301b through the first through hole 401. The first space 301b can provide space for the external device, facilitating the entry of the external device and reducing the risk of the external device damaging components within the first recess 301. The first insulating material can enter the first recess 301 through the first space 301b.

Referring to FIGs. 16 to 23, in some embodiments, the protrusion 44 is located outside the first recess 301, reducing the occupancy of the first recess 301 by the protrusion 44 and reducing the length of the external device extending into the first recess 301, further reducing the risk of the external device damaging components within the first recess 301.

In some embodiments, the first through hole 401 is located outside the first recess 301, allowing the external device to pass through the first through hole 401 to enter the first recess 301.

In some embodiments, the battery module 100 includes a waterproof vent valve (not shown in the figures), and the waterproof vent valve closes the first through hole 401. The waterproof vent valve can prevent external impurities from entering the first recess 301, and can be used to discharge gas from the battery module 100.

In some embodiments, the first through hole 401 and the first insulation member 50 are spaced apart from each other, facilitating the connection of the first fastener 100a to the first through hole 401. In some embodiments of this application, a first insulation member 50 is disposed in the first through hole 401. The first through hole 401 can be closed through the first insulation member 50, reducing the entry of impurities such as dust into the first recess 301 through the first through hole 401.

In some embodiments, along the third direction Z, a length of the second component 40 is greater than a length of the plurality of cells 21 stacked, and two ends of the second component 40 extend out of the cell assembly 20, facilitating the arrangement of the protrusion 44, so that the protrusion 44 is located outside the first recess 301.

In some embodiments, along the second direction Y and along the first direction X, the protrusion 44 extends beyond the main body portion 211a, reducing the influence of the protrusion 44 on heat dissipation of the main body portion 211a and facilitating heat dissipation.

In some embodiments, the second component 40 includes two protrusions 44, and the two protrusions 44 are spaced apart on the top wall 43 in the third direction Z. The first insulating material can be injected simultaneously through the first through holes 401 provided on the two protrusions 44, helping to improve the potting efficiency.

In some embodiments, along the third direction Z, the projection of the first through hole 401 and a projection of the first sealing portion 2115 are spaced apart from each other, which can reduce the risk of the first sealing portion 2115 being damaged by entry of the external device through the first through hole 401.

In some embodiments, along the second direction Y, the protrusion 44 is located between the first sealing portion 2115 of the first group of cells 201 and the first sealing portion 2115 of the second group of cells 202. Along the third direction Z, the projection of the protrusion 44 is and the first sealing portion 2115 of the first group of cells 201 are spaced apart from each other. Along the third direction Z, the projection of the protrusion 44 is and a projection of the first sealing portion 2115 of the second group of cells 202 are spaced apart from each other, which can reduce the risk of the first sealing portion 2115 being damaged by entry of the external device through the first through hole 401.

In some embodiments, the first through hole 401 and the first heat dissipation channel 40a are spaced apart from each other, reducing interference between the first through hole 401 and the first heat dissipation channel 40a, facilitating the external device extending into the first recess 301 through the first through hole 401.

In some embodiments, the second component 40 includes a bottom wall 45, and the bottom wall 45 and the top wall 43 are arranged along the first direction X.

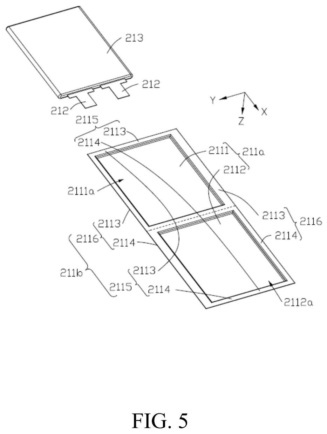

Referring to FIG. 3 to FIG. 7, FIG. 29, and FIG. 30, in some embodiments, the battery module 100 includes a heat conducting member 60. The heat conducting member 60 includes a first portion 61 and a second portion 62. Along the third direction Z, the main body portion 211a includes a main body front wall 2105 and a main body rear wall 2106, the first portion 61 is connected to the main body front wall 2105 or the main body rear wall 2106, and the second portion 62 is connected to the first portion 61. The second component 40 includes a left wall 46 and a right wall 47 arranged along the second direction Y. Along the second direction Y, the second portion 62 is disposed between the main body right wall 2102 and the left wall 46. The heat of the main body front wall 2105 or the main body rear wall 2106 is conducted to the left wall 46 through the second portion 62 and dissipated through the first heat dissipation channel 40a.

In some embodiments, the second portion 62 is in contact with the left wall 46, facilitating heat dissipation.

In some embodiments, the battery module 100 includes a first heat conducting adhesive (not shown in the figures), and the second portion 62 is connected to the left wall 46 through the first heat conducting adhesive, further facilitating heat dissipation.

In some embodiments, the heat conducting member 60 includes a first portion 61 and two second portions 62, and the two second portions 62 are connected to two sides of the first portion 61 along the second direction Y. The first portion 61 is connected to the main body front wall 2105 or the main body rear wall 2106. Along the second direction Y, one of the second portions 62 is disposed on a side of the main body left wall 2101, and the other second portion 62 is disposed between the main body right wall 2102 and the left wall 46, further facilitating heat dissipation.

In some embodiments, the heat conducting member 60 includes a third portion 63, and the third portion 63 is connected to the first portion 61. The second portion 62 and the main body bottom wall 2103 are arranged along the first direction X. The heat of the main body front wall 2105 or the main body rear wall 2106 is dissipated through the third portion 63.

In some embodiments, along the third direction Z, the heat conducting members 60 are disposed on two sides of each main body portion 211a. The first portion 61 of one of the two heat conducting members 60 is connected to the main body front wall 2105, and the first portion 61 of the other heat conducting member 60 is connected to the main body rear wall 2106. This allows for heat dissipation for the main body front wall 2105 and the main body rear wall 2106 of each main body portion 211a, helping to improve the heat dissipation efficiency.

In some embodiments, the battery module 100 includes a second heat conducting adhesive 100b, and the first portion 61 is connected to the main body front wall 2105 and the main body rear wall 2106 through the second heat conducting adhesive 100b, facilitating heat dissipation.

In some embodiments, the battery module 100 includes a third heat conducting adhesive (not shown in the figures), and the third portion 63 is connected to the main body bottom wall 2103 through the third heat conducting adhesive, facilitating heat dissipation.

In some embodiments, the battery module 100 includes an insulator 100c, and the insulator 100c is disposed between the third portion 63 and the main body bottom wall 2103.

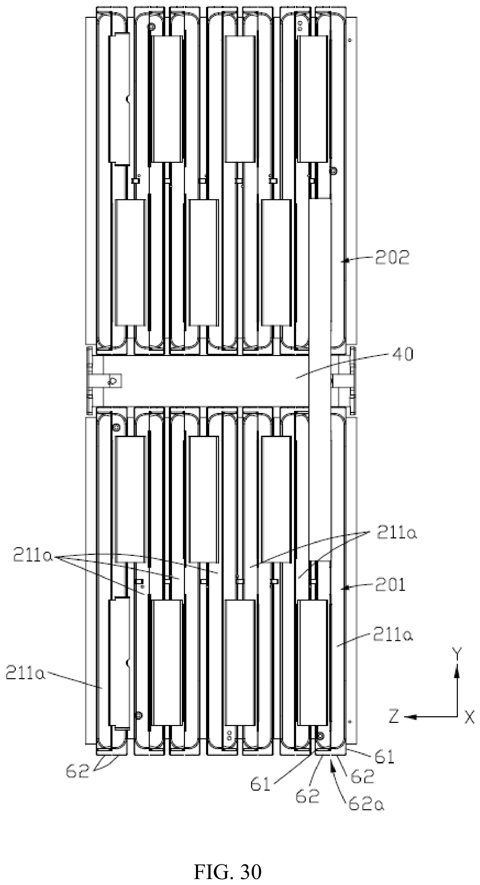

In some embodiments, when viewed along the second direction Y, in the third direction Z, a first gap 62a is provided between the two second portions 62 of the heat conducting members 60 on two sides of a same main body portion 211a (as shown in FIG. 30), reducing the possibility of the two second portions 62 being stacked. This can improve the flatness of the second portions 62, facilitate the connection to the left wall 46, ensure the heat dissipation area, and facilitate the assembly and production.

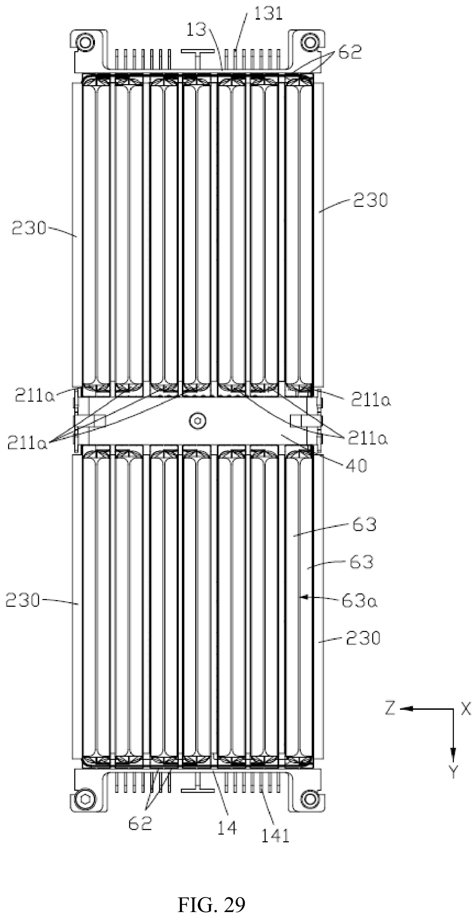

In some embodiments, when viewed along the first direction X, in the third direction Z, a second gap 63a is provided between the two third portions 63 of the heat conducting members 60 on two sides of a same main body portion 211a (as shown in FIG. 29), reducing the possibility of the two third portions 63 being stacked. This can improve the flatness of the third portions 63, ensure the heat dissipation area, and facilitate the assembly and production.

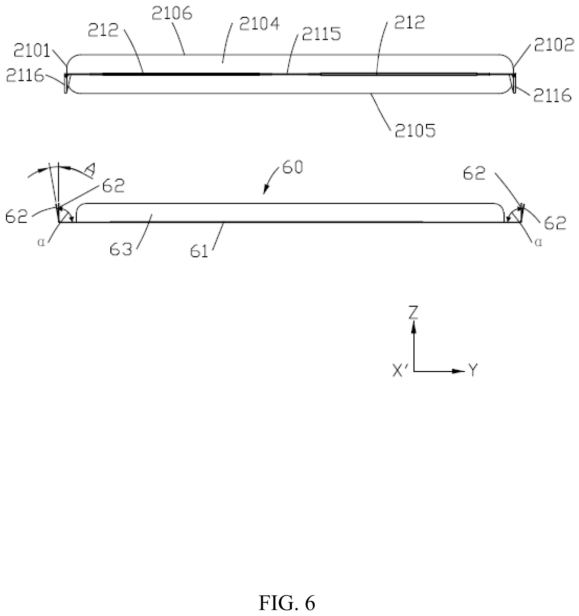

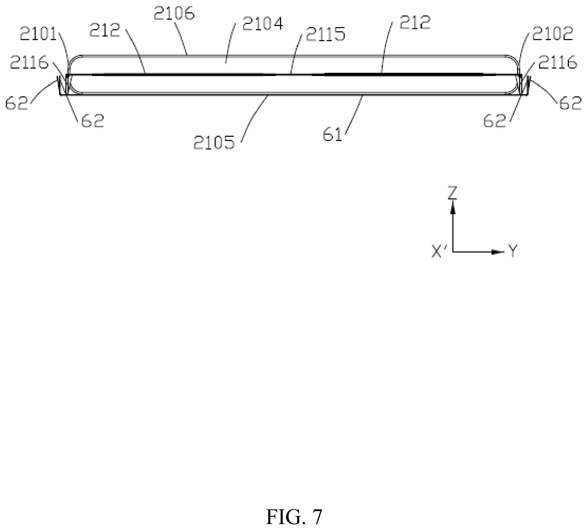

Referring to FIG. 6 and FIG. 7, in some embodiments, when the cell 21 is not connected to the heat conducting member 60, the second portion 62 of the heat conducting member 60 is configured to be disposed along a direction leaving the first portion 61, so that the second portion 62 is inclined relative to the first portion 61, forming an obtuse angle α between the second portion 62 and the first portion 61. When the cell 21 is placed in the heat conducting member 60, the cell 21 can slide in along an inclined surface of the second portion 62 and is connected to the first portion 61, which can reduce the risk of the second portion 62 scratching the cell housing 211, and facilitate the installation of the cell 21.

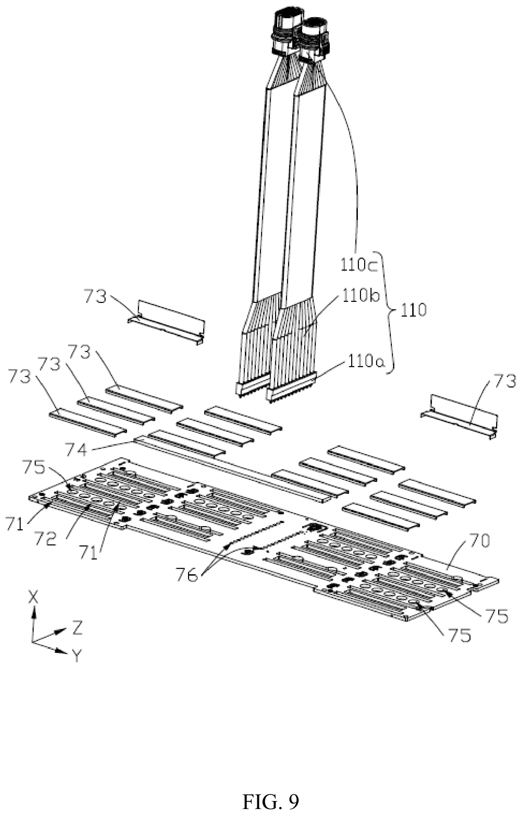

Referring to FIG. 3, FIG. 8, FIG. 9, FIG. 18, and FIG. 20, in some embodiments, the battery module 100 further includes a third component 70. The protrusion 44 and the third component 70 are arranged along the first direction X, and the protrusion 44 and the third component 70 are spaced from each other, reducing the influence on the third component 70 caused by entry of the external device through the first through hole 401.

In some embodiments, the electrode terminal 212 runs through the third component 70 and connects to a side of the third component 70, the side of the third component 70 being a side facing away from the cell housing 211, and the first insulation member 50 covers at least a portion of the third component 70, providing insulation and protection for the third component 70.

In some embodiments, the electrode terminal 212, the third component 70, and the first component 30 are bonded by the first insulation member 50, enhancing the connection stability of the electrode terminal 212, the third component 70, and the first component 30, and providing sealing and insulation protection for the electrode terminal 212, the third component 70, and the first component 30.

In some embodiments, the first insulation member 50 covers a portion of the electrode terminal 212 extending out of the cell housing 211 and at least a portion of each first sealing portion 2115, enhancing the protection for the first sealing portion 2115 and improving the heat dissipation of the cell housing 211.

In some embodiments, the third component 70 is provided with a first hole 71 and a second hole 72 arranged along the third direction Z. The first hole 71 and the second hole 72 extend along the second direction Y. The electrode terminal 212 of one of adjacent cells 21 runs through the first hole 71, the electrode terminal 212 of the other cell 21 runs through the second hole 72, and the two electrode terminals are stacked and connected, forming a connection region 212a. The connection region 212a is connected to the third component 70, and the connection region 212a is disposed between the third component 70 and the first component 30.

In some embodiments, the third component 70 includes a plurality of first conductive sheets 73. The first conductive sheet 73 is connected to the third component 70. The electrode terminal 212 of one of adjacent cells 21 runs through the first hole 71, the electrode terminal 212 of the other cell 21 runs through the second hole 72, and the two electrode terminals are stacked and connected to the first conductive sheet 73 by welding. Welding includes laser welding, ultrasonic welding, and the like. In other embodiments, the connection region 212a and the first conductive sheet 73 may alternatively be connected by other means such as conductive adhesive.

In an embodiment, the first conductive sheet 73 is configured to collect electrical signal information of the cell, where the electrical signal information includes but is not limited to voltage, current, temperature, and resistance.

In an embodiment, the third component 70 is further provided with a second conductive sheet 74. The second conductive sheet 74 connects the electrode terminal 212 of the first group of cells 201 and the electrode terminal 212 of the second group of cells 202, and is configured to transmit current from the first group of cells 201 to the second group of cells 202, implementing series or parallel connection between the first group of cells 201 and the second group of cells 202.

In some embodiments, the third component 70 is further comprises provided with a third hole 75. When viewed along a direction X' opposite to the first direction X, along the third direction Z, the third hole 75 is located between the first hole 71 and the second hole 72. The third hole 75 facilitates the flow of the first insulating material into the first recess 301, improving the efficiency of injecting the first insulating material into the first recess 301.

In some embodiments, the third component 70 is further provided with a fourth hole 76, and along the second direction Y, the fourth hole 76 is disposed at a middle position of the third component 70. The battery module 100 further includes a conductive assembly 110. The conductive assembly 110 includes a first connecting portion 110a, a wire 110b, and a second connecting portion 110c. The first connecting portion 110a is connected to the third component 70 through a plurality of fourth holes 76, and the wire 110b connects the first connecting portion 110a and the second connecting portion 110c.

In some embodiments, the conductive assembly 110 is configured to transmit electrical signal information of the cell 21 and/or transmit power of the cell assembly 20, where the electrical signal information includes but is not limited to voltage, current, temperature, and resistance. In this embodiment, the conductive assembly 110 being configured to transmit electrical signal information of the cell 21 is used as an example for description.

Optionally, the third component 70 includes a first circuit board, and the first circuit board includes a flexible printed circuit (FPC, Flexible Printed Circuit). Optionally, the first circuit board includes a printed circuit board (PCB, Printed Circuit Board).

Referring to FIG. 1 to FIG. 3 and FIG. 8, in some embodiments, the battery module 100 further includes a first electrical connection member 120 and a second electrical connection member 130, and the first electrical connection member 120 and the second electrical connection member 130 are connected to external devices to implement input or output of electrical energy. Optionally, the first electrical connection member 120 and the second electrical connection member 130 are welded to the third component 70. Optionally, the first electrical connection member 120 includes a copper bar, and the second electrical connection member 130 includes a copper bar.

In some embodiments, the first electrical connection member 120 includes a first conductive portion 120a and a first insulating portion 120b, the first conductive portion 120a extends from two ends of the first insulating portion 120b, one end of the first conductive portion 120a is connected to the first conductive sheet 73, and another end is connected to the external device.

In some embodiments, along the third direction Z, a projection of the first conductive sheet 73, a projection of the electrode terminal 212, and a projection of the first conductive portion 120a overlap, reducing the bending of the electrode terminal 212, simplifying the assembly process, and facilitating welding of the electrode terminal 212 to the first conductive sheet 73 and welding of the first conductive portion 120a to the first conductive sheet 73.

In some embodiments, the second electrical connection member 130 includes a second conductive portion 130a and a second insulating portion 130b, the second conductive portion 130a extends from two ends of the second insulating portion 130b, one end of the second conductive portion 130a is connected to another first conductive sheet 73, and another end is connected to the external device.

In some embodiments, along the third direction Z, a projection of the another first conductive sheet 73, a projection of the electrode terminal 212, and a projection of the second conductive portion 130a overlap, reducing the bending of the electrode terminal 212, simplifying the assembly process, and facilitating welding of the electrode terminal 212 to the another first conductive sheet 73 and welding of the second conductive portion 130a to the another first conductive sheet 73.

Referring to FIG. 1 to FIG. 3, FIG. 21, and FIG. 23, in some embodiments, an outer surface of the first component 30 is insulative. Optionally, the first component 30 is made of an insulating material. Optionally, the first component 30 is made of a metal material and an insulating material, and the insulating material may cover an outer surface of the metal material.

In some embodiments, the first component 30 includes a base portion 31, and the base portion 31 is disposed on a side of the third component 70 facing away from the cell housing 211. The base portion 31 is provided with a connecting protrusion 311 on a side facing the third component 70, and the connecting protrusion 311 is connected to the third component 70, so that a third gap 30a is provided between the third component 70 and the base portion 31. The connection region 212a is located in the third gap 30a, which allows the first insulating material to flow into the third gap 30a and cover the connection region 212a to provide insulation and protection for the connection region 212a, and also allows the third component 70 to be bonded to the base portion 31.

In some embodiments, the first component 30 includes a first side wall 32, and the first side wall 32 is formed by extending from an edge of the base portion 31. The first side wall 32 and the base portion 31 form a first recess 301. Along a direction opposite to the first direction X, the first recess 301 is facing the cell assembly 20. Optionally, the first component 30 includes four first side walls 32, and the four first side walls 32 and the base portion 31 enclose the first recess 301.

In some embodiments, the first opening 301a is formed at an end of the four first side walls 32 facing away from the base portion 31.

In some embodiments, along the second direction Y, a projection of the third component 70 is located within a projection of the first recess 301, providing insulation and protection for the third component 70.

In some embodiments, along the second direction Y, the projection of the electrode terminal 212 is located within a projection of the first side wall 32, providing insulation and protection for the electrode terminal 212. Optionally, the projection of the first sealing portion 2115 is located within the projection of the first side wall 32, further providing insulation and protection for the electrode terminal 212.

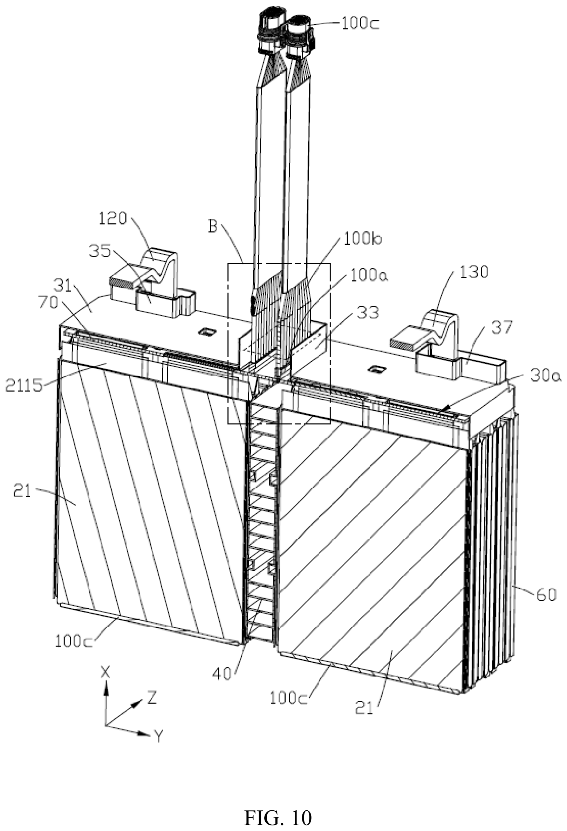

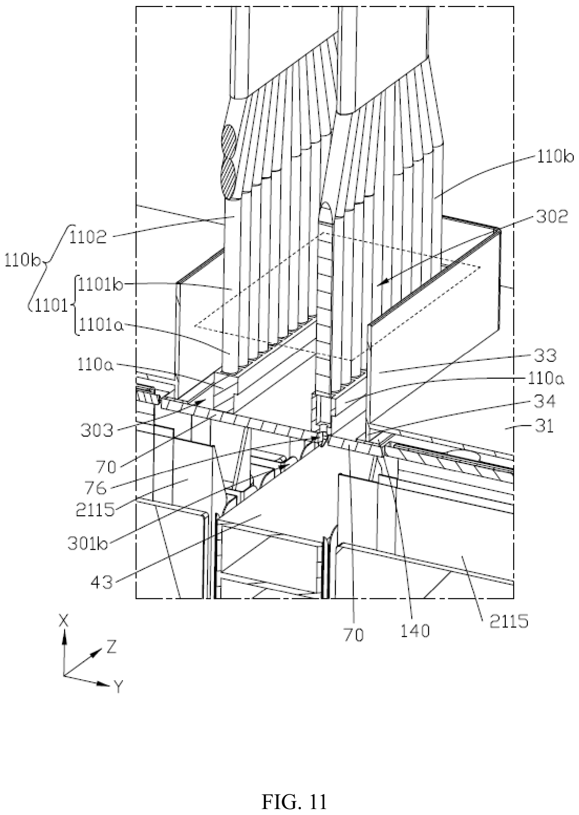

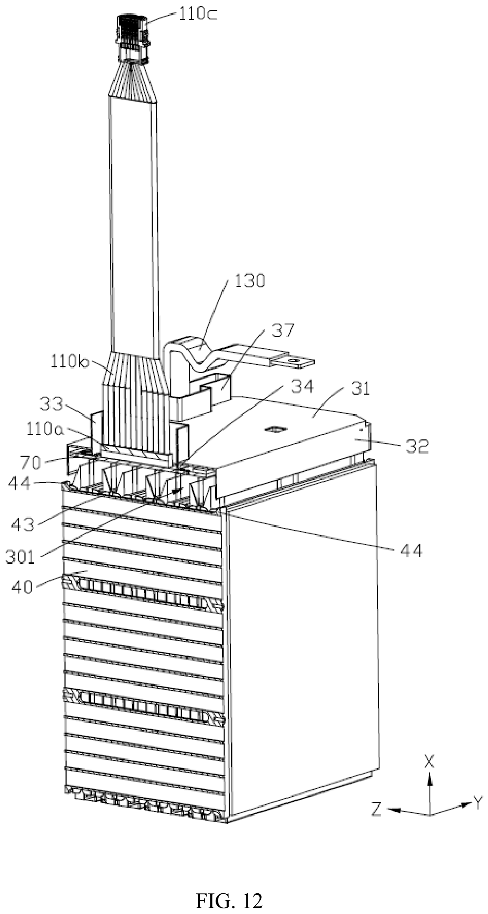

Referring to FIG. 1 to FIG. 3, FIG. 10 to FIG. 12, and FIG. 20, in some embodiments, the battery module 100 includes a first limiting portion 33, the first limiting portion 33 is connected to a side of the base portion 31, the side of the base portion 31 being a side facing away from the third component 70, and the first limiting portion 33 includes a second opening 302.

In some embodiments, the first component 30 includes a second through hole 312, and the second through hole 312 extends through the base portion 31 along the first direction X. Along the first direction X, before the first insulating material is injected, the second through hole 312 is in communication with the second opening 302. The conductive assembly 110 is led out from the second through hole 312 and the second opening 302.

In some embodiments, the first connecting portion 110a runs through the second through hole 312 to connect to the third component 70, and the wire 110b is led out from the second opening 302 and the second through hole 312.

In some embodiments, the battery module 100 includes a second insulation member 90, and at least a portion of the second insulation member 90 is disposed in a gap between the conductive assembly 110 and the first limiting portion 33. The second insulation member 90 is configured to be formed by curing a second insulating material disposed in the gap between the conductive assembly 110 and the first limiting portion 33.

In some embodiments, the second insulation member 90 wraps a joint between the first connecting portion 110a and the third component 70, providing insulation and protection for the joint between the first connecting portion 110a and the third component 70. The second insulation member 90 wraps the conductive assembly 110 located within the first limiting portion 33. Optionally, the second insulation member 90 wraps the wire 110b and the first connecting portion 110a located within the first limiting portion 33.

In some embodiments, before the second insulating material is injected, the second through hole 312 is in communication with the second opening 302. After the second insulating material is injected, the second insulation member 90 fills the second opening 302 of the first limiting portion 33, so that the second through hole 312 is no longer in communication with the second opening 302.

In some embodiments, the battery module 100 includes a second limiting portion 34, and along the first direction X, a projection of the second through hole 312 is located within a projection of the second limiting portion 34. The second limiting portion 34 is connected to a side of the base portion 31, the side of the base portion 31 being a side facing the third component 70, and the second limiting portion 34 is connected to the third component 70, which can reduce the entry of the second insulating material into the first recess 301. The second limiting portion 34 includes a third opening 303. The conductive assembly 110 is led out from the third opening 303, the second through hole 312, and the second opening 302.

Before the second insulating material is injected, the second through hole 312 is in communication with the third opening 303. After the second insulating material is injected, the second insulation member 90 fills the third opening 303 of the first limiting portion 33, so that the second through hole 312 is no longer in communication with the third opening 303.

Before the first insulating material is injected, the second insulating material is first injected, so that the third opening 303 is no longer in communication with the second through hole 312, reducing the entry of the first insulating material into the first limiting portion 33 and the second limiting portion 34. At least a portion of the second insulation member 90 is disposed in the gap between the first limiting portion 33 and the conductive assembly 110 and the gap between the second limiting portion 34 and the conductive assembly 110. Optionally, the second insulation member 90 wraps a joint between the first connecting portion 110a located in the second limiting portion 34 and the third component 70, providing insulation and protection for the joint between the first connecting portion 110a and the third component 70, and reducing the risk of short circuits. The second insulation member 90 wraps the first connecting portion 110a and the wire 110b, and the second insulation member 90 is disposed in a gap between adjacent wires 110b.

In some embodiments, the battery module 100 includes a first limiting portion 33 and a second limiting portion 34. Before the second insulating material is injected, the third opening 303, the second through hole 312, and the second opening 302 are in communication with each other. The second insulation member 90 is disposed in the third opening 303, the second through hole 312, and the second opening 302, so that the third opening 303, the second through hole 312, and the second opening 302 are no longer in communication.

In some embodiments, the battery module 100 includes a second limiting portion 34. Before the second insulating material is injected, the third opening 303 and the second through hole 312 are in communication with each other. The second insulation member 90 is arranged in the third opening 303, the second through hole 312, and the second opening 302, so that the third opening 303 and the second through hole 312 are no longer in communication with each other. The second limiting portion 34 can limit the overflow of the second insulating material from the second limiting portion 34.

In some embodiments, along the first direction X, a projection of the first limiting portion 33 overlaps with a projection of the second limiting portion 34. The first limiting portion 33 and the second limiting portion 34 may be any structures surrounding the first connecting portion 110a and the wires 110b located in the second opening 302 and the third opening 303, such as cylindrical structures, elliptical cylindrical structures, regular prism structures, and irregular column structures, where the regular prism structure may be a triangular prism, a quadrangular prism, a pentagonal prism, or the like. In this application, the first limiting portion 33 being a quadrangular prism is used as an example for description.

In some embodiments, the first limiting portion 33 includes a first connection wall 331, a second connection wall 332, a third connection wall 333, and a fourth connection wall 334. The first connection wall 331 and the second connection wall 332 are arranged along the third direction Z, and the third connection wall 333 and the fourth connection wall 334 are arranged along the second direction Y. The first connection wall 331 connects the third connection wall 333 and the fourth connection wall 334, and the second connection wall 332 connects the third connection wall 333 and the fourth connection wall 334, forming the first limiting portion 33. The first connection wall 331, the second connection wall 332, the third connection wall 333, and the fourth connection wall 334 are connected to the base portion 31. When viewed along a direction X' opposite to the first direction X, the first connection wall 331, the second connection wall 332, the third connection wall 333, and the fourth connection wall 334 surround the first connecting portion 110a and the wire 110b located in the second opening 302.

In some embodiments, the first limiting portion 33 and the second limiting portion 34 are integrally formed with the base portion 31, for example, by injection molding.

In some embodiments, the first limiting portion 33 and the second limiting portion 34 are bonded to the base portion 31.

In some embodiments, the battery module 100 includes a first sealing member 140, and the first sealing member 140 is disposed between the third component 70 and the second limiting portion 34. The first sealing member 140 connects the third component 70 and the second limiting portion 34, which can further isolate the first recess 301 and the third opening 303, further reducing the entry of the second insulating material into the first recess 301. Optionally, the first sealing member 140 includes a compressible elastic member, such as foam or a silicone pad.

In some embodiments, in injecting the second insulating material, the conductive assembly 110 is first straightened so that the conductive assembly 110 is approximately perpendicular to the third component 70, and then the second insulating material is injected into the first limiting portion 33 and the second limiting portion 34. The second insulating material is cured to form the second insulation member.

In some embodiments, the second insulating material includes at least one of polyurethane adhesive, epoxy adhesive, or silicone adhesive. Optionally, the second insulating material includes quick-drying adhesive.

In some embodiments, the wire 110b includes a first section 1101 disposed in the first limiting portion 33 and a second section 1102 extending from the first limiting portion 33. The first section 1101 includes a first segment 1101a and a second segment 1101b, and the first segment 1101a connects the first connecting portion 110a and the second segment 1101b.

The battery module 100 further includes a third insulation member, and the third insulation member is configured to be formed by curing a third insulating material disposed in the first limiting portion 33 and the second limiting portion 34. The third insulation member is partially located in the second limiting portion 34, partially located in the first limiting portion 33, and partially located in the second through hole 312. A viscosity of the third insulating material is greater than that of the second insulating material, helping to enhance waterproof performance of the conductive assembly 110. After the third insulating material is cured to form the third insulation member, the second insulating material is injected into the first limiting portion 33, and the second insulating material is cured to form the second insulating material.

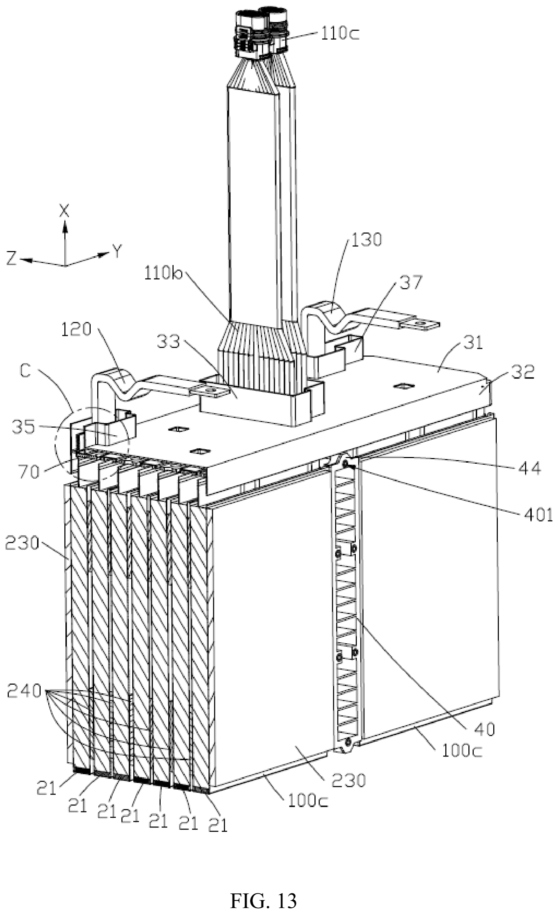

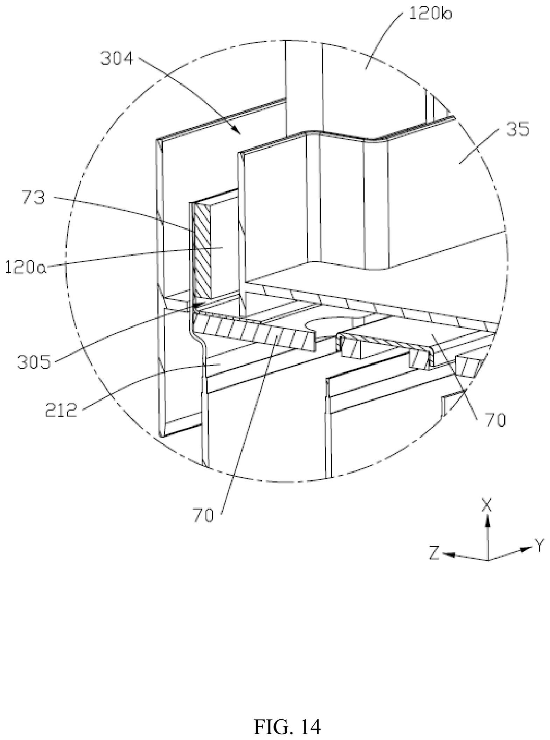

Referring to FIG. 1 to FIG. 3, FIG. 13, and FIG. 14, in some embodiments, the battery module 100 includes a third limiting portion 35, the third limiting portion 35 is connected to a side of the base portion 31, the side of the base portion 31 being a side facing away from the third component 70, and the third limiting portion 35 includes a fourth opening 304. The first component 30 includes a third through hole 313, and the third through hole 313 extends through the base portion 31 along the first direction X. The first electrical connection member 120 is led out from the third through hole 313 and the fourth opening 304.

Optionally, along the third direction Z, the projection of the first conductive portion 120a is located within a projection of the third limiting portion 35. The third limiting portion 35 provides insulation and protection for the first conductive portion 120a. The battery module 100 includes a fourth insulation member 91. The fourth insulation member 91 is configured to be formed by curing a fourth insulating material disposed in the third limiting portion 35, and at least a portion of the fourth insulation member 91 is disposed in a gap between the first electrical connection member 120 and the third limiting portion 35. The fourth insulation member 91 wraps the first conductive portion 120a, further providing insulation and protection.

Optionally, along the third direction Z, the projection of the first conductive portion 120a, a projection of a portion of the electrode terminal 212 extending out of the third through hole 313, and a projection of a portion of the first conductive sheet 73 extending out of the third through hole 313 are located within the projection of the third limiting portion 35. The third limiting portion 35 provides further insulation and protection for the first conductive portion 120a, the electrode terminal 212, and the first conductive sheet 73. The fourth insulation member 91 wraps the first conductive portion 120a, the portion of the electrode terminal 212 extending out of the third through hole 313, and the portion of the first conductive sheet 73 extending out of the third through hole 313, further providing insulation and protection.

Optionally, the projection of the first insulating portion 120b is located within the projection of the third limiting portion 35. The third limiting portion 35 provides insulation and protection for the first conductive portion 120a, the portion of the electrode terminal 212 extending out of the third through hole 313, the portion of the first conductive sheet 73 extending out of the third through hole 313, and the first insulating portion 120b located within the third limiting portion 35. The fourth insulation member 91 wraps the first conductive portion 120a, the portion of the electrode terminal 212 extending out of the third through hole 313, the portion of the first conductive sheet 73 extending out of the third through hole 313, and the first insulating portion 120b located within the third limiting portion 35, further providing insulation and protection.

In some embodiments, before the fourth insulating material is injected, the third through hole 313 is in communication with the fourth opening 304. After the fourth insulating material is injected, the fourth insulation member 91 fills the fourth opening 304 of the third limiting portion 35, so that the third through hole 313 is no longer in communication with the fourth opening 304.

In some embodiments, the battery module 100 includes a fourth limiting portion 36, and along the first direction X, the projection of the third through hole 313 is located within a projection of the fourth limiting portion 36. The fourth limiting portion 36 is connected to a side of the base portion 31, the side of the base portion 31 being a side facing the third component 70, which can reduce the entry of the fourth insulating material into the first recess 301. The fourth limiting portion 36 includes a fifth opening 305. The first electrical connection member 120 is led out from the fifth opening 305, the third through hole 313, and the fourth opening 304.

Before the fourth insulating material is injected, the third through hole 313 is in communication with the fourth opening 304. After the fourth insulating material is injected, the fourth insulation member 91 fills the fifth opening 305 of the fourth limiting portion 36, so that the third through hole 313 is no longer in communication with the fifth opening 305.

Before the first insulating material is injected, the fourth insulating material is first injected, so that the fifth opening 305 is no longer in communication with the third through hole 313, reducing the entry of the first insulating material into the fourth limiting portion 36 and the third limiting portion 35. The fourth insulation member 91 is disposed in the fourth limiting portion 36 through the third through hole 313, and the fourth insulation member 91 wraps the first conductive portion 120a located within the fourth limiting portion 36, the electrode terminal 212, and the first conductive sheet 73, further providing insulation and protection, and reducing the risk of short circuits.

In some embodiments, the battery module 100 includes a third limiting portion 35 and a fourth limiting portion 36. Before the fourth insulating material is injected, the fourth opening 304, the third through hole 313, and the fifth opening 305 are in communication with each other. The fourth insulation member 91 is disposed in the fourth opening 304, the third through hole 313, and the fifth opening 305, so that the fourth opening 304, the third through hole 313, and the fifth opening 305 are no longer in communication with each other.

In some embodiments, along the first direction X, a projection of the third limiting portion 35 overlaps with a projection of the fourth limiting portion 36.

In some embodiments, the third limiting portion 35 and the fourth limiting portion 36 are substantially the same as the first limiting portion 33 and the second limiting portion 34 in structure, which is not repeated herein.

In some embodiments, the third limiting portion 35 and the fourth limiting portion 36 are integrally formed with the base portion 31, for example, by injection molding.

In some embodiments, the third limiting portion 35 and the fourth limiting portion 36 are bonded to the base portion 31.

In some embodiments, the fourth insulating material includes one of polyurethane adhesive, epoxy adhesive, and silicone adhesive. Optionally, the fourth insulating material includes quick-drying adhesive.

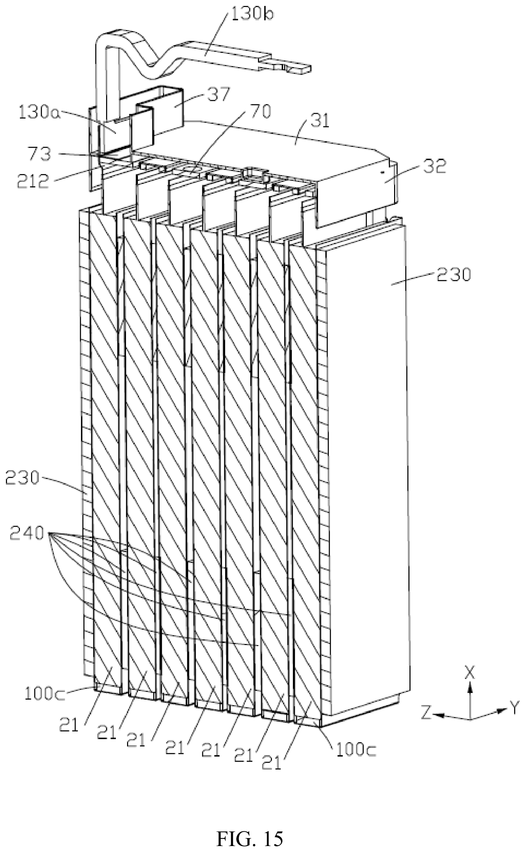

Referring to FIG. 1 to FIG. 3 and FIG. 15, in some embodiments, the battery module 100 includes a fifth limiting portion 37, the fifth limiting portion 37 is connected to a side of the base portion 31, the side of the base portion 31 being a side facing away from the third component 70, and the fifth limiting portion 37 includes a sixth opening 306. The base portion 31 has a fourth through hole 314, and the fourth through hole 314 extends through the base portion 31 along the first direction X. The second electrical connection member 130 is led out from the fourth through hole 314 and the sixth opening 306.

Optionally, along the third direction Z, a projection of the second conductive portion 130a is located within a projection of the fifth limiting portion 37. The fifth limiting portion 37 provides insulation and protection for the second conductive portion 130a. The battery module 100 includes a fifth insulation member 92. The fifth insulation member 92 is configured to be formed by curing a fifth insulating material disposed in the fifth limiting portion 37, and at least a portion of the fifth insulation member 92 is disposed in a gap between the second electrical connection member 130 and the fifth limiting portion 37. The fifth insulation member 92 wraps the second conductive portion 130a, further providing insulation and protection.

Optionally, along the third direction Z, the projection of the second conductive portion 130a, a projection of a portion of the electrode terminal 212 extending out of the fourth through hole 314, and a projection of a portion of the first conductive sheet 73 extending out of the fourth through hole 314 are located within a projection of the fifth limiting portion 37. The fifth limiting portion 37 provides further insulation and protection for the second conductive portion 130a, the electrode terminal 212, and the first conductive sheet 73. The fifth insulation member 92 wraps the second conductive portion 130a, the portion of the electrode terminal 212 extending out of the fourth through hole 314, and the portion of the first conductive sheet 73 extending out of the fourth through hole 314, further providing insulation and protection.

Optionally, the projection of the second insulating portion 130b is located within the projection of the fifth limiting portion 37. The fifth limiting portion 37 provides insulation and protection for the second conductive portion 130a, the portion of the electrode terminal 212 extending out of the fourth through hole 314, the portion of the first conductive sheet 73 extending out of the fourth through hole 314, and the second insulating portion 130b located within the fifth limiting portion 37. The fifth insulation member 92 wraps the second conductive portion 130a, the portion of the electrode terminal 212 extending out of the fourth through hole 314, the portion of the first conductive sheet 73 extending out of the fourth through hole 314, and the second insulating portion 130b located within the fifth limiting portion 37, further providing insulation and protection.

In some embodiments, before the fifth insulating material is injected, the fourth through hole 314 is in communication with the sixth opening 306. After the fifth insulating material is injected, the fifth insulation member 92 fills the sixth opening 306, so that the fourth through hole 314 is no longer in communication with the sixth opening 306.

In some embodiments, the battery module 100 includes a sixth limiting portion 38, and along the first direction X, a projection of the fourth through hole 314 is located within a projection of the sixth limiting portion 38. The sixth limiting portion 38 is connected to a side of the base portion 31, the side of the base portion 31 being a side facing the third component 70, which can reduce the entry of the fourth insulating material into the first recess 301. The sixth limiting portion 38 includes a seventh opening 307. The second electrical connection member 130 is led out from the seventh opening 307, the fourth through hole 314, and the sixth opening 306.

Before the fifth insulating material is injected, the fourth through hole 314 is in communication with the seventh opening 307. After the fifth insulating material is injected, the fifth insulation member 92 fills the seventh opening 307, so that the fourth through hole 314 is no longer in communication with the seventh opening 307.

Before the first insulating material is injected, the fifth insulating material is first injected, so that the seventh opening 307 is no longer in communication with the fourth through hole 314, reducing the entry of the first insulating material into the sixth limiting portion 38 and the fifth limiting portion 37.

In some embodiments, the fifth insulation member 92 is disposed in the sixth limiting portion 38 through the fourth through hole 314, and the fifth insulation member 92 wraps the second conductive portion 130a located within the sixth limiting portion 38, the electrode terminal 212, and the first conductive sheet 73, further providing insulation and protection, and reducing the risk of short circuits.

In some embodiments, the battery module 100 includes a fifth limiting portion 37 and a sixth limiting portion 38. Before the fourth insulating material is injected, the sixth opening 306, the fourth through hole 314, and the seventh opening 307 are in communication with each other. The fifth insulation member 92 is disposed in the sixth opening 306, the fourth through hole 314, and the seventh opening 307, so that the sixth opening 306, the fourth through hole 314, and the seventh opening 307 are no longer in communication with each other.

In some embodiments, along the first direction X, a projection of the fifth limiting portion 37 overlaps with a projection of the sixth limiting portion 38.

In some embodiments, the fifth limiting portion 37 and the sixth limiting portion 38 are substantially the same as the first limiting portion 33 and the second limiting portion 34 in structure, which is not repeated herein.

In some embodiments, the fifth limiting portion 37 and the sixth limiting portion 38 are integrally formed with the base portion 31, for example, by injection molding.

In some embodiments, the fifth limiting portion 37 and the sixth limiting portion 38 are bonded to the base portion 31.

In some embodiments, the fifth insulating material includes one of polyurethane adhesive, epoxy adhesive, and silicone adhesive. Optionally, the fifth insulating material includes quick-drying adhesive.

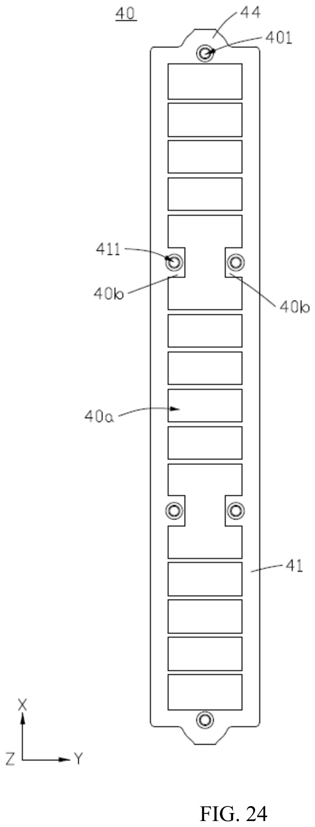

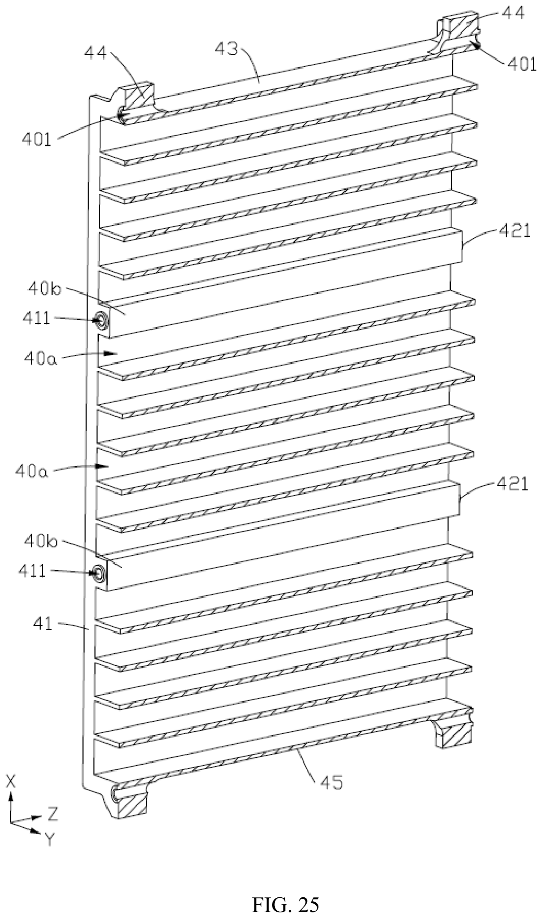

Referring to FIG. 1 to FIG. 25, another embodiment of this application provides a battery module 100 including a cell assembly 20, a first component 30, a second component 40, and a first insulation member 50. The cell assembly 20 includes a plurality of cells 21, and each cell 21 includes a cell housing 211 and an electrode terminal 212, the electrode terminal 212 extends out from the cell housing 211. The cell housing 211 and the first component 30 are arranged along a first direction X, the first component 30 has a first recess 301, and a portion of each electrode terminal 212 is disposed in the first recess 301. At least a portion of the first insulation member 50 is disposed in a gap between the electrode terminal 212 and the first component 30. The second component 40 is provided with a first through hole 401, the second component 40 and the first component 30 are arranged along the first direction X, the second component 40 includes a top wall 43 and a protrusion 44, the protrusion 44 extends away from the top wall 43, and the first through hole 401 extends through the protrusion 44. Along the first direction X, a first space 301b is provided between the top wall 43 and the first opening 301a, and when viewed along a third direction Z, at least a portion of the first through hole 401 is located within the first space 301b, the third direction is perpendicular to the first direction.

In some embodiments, when viewed along the third direction Z, the first through hole 401 is entirely located within the first space 301b, the third direction is perpendicular to the first direction.

In some embodiments, along the third direction Z, a projection of the first through hole 401 overlaps with a projection of the first space 301b.

In some embodiments, in the first direction X, the projection of the first through hole 401 along the third direction Z is located between a projection of the top wall 43 along the third direction Z and a projection of the first recess 301 along the third direction Z.

In this application, a portion of each electrode terminal 212 is disposed in the first recess 301, and the first insulation member 50 is disposed in the gap between the electrode terminal 212 and the first component 30, enhancing the sealing and insulation protection for the electrode terminal 212. Moreover, the first through hole 401 is disposed in the protrusion 44, and the first insulation member 50 is disposed in the first recess 301 through the first through hole 401, which can reduce the arrangement of other channel structures in the battery module 100, thereby reducing structural restrictions in the battery module 100.

It can be understood that other structures of the battery module 100 in this embodiment are the same as those of the battery module 100 in the foregoing embodiments, and details are not repeated herein.

Referring to FIG. 1 to FIG. 25, another embodiment of this application provides a battery module 100 including a cell assembly 20, a first component 30, a third component 70, a second limiting portion 34, a conductive assembly 110, and a second insulation member 90. The cell assembly 20 includes a plurality of cells 21, and each cell 21 includes a cell housing 211 and an electrode terminal 212, the electrode terminal 212 extends out from the cell housing 211. The third component 70 includes a first hole 71 and a second hole 72, the electrode terminal 212 runs through the first hole 71 and the second hole 72, and the cell housing 211 and the third component 70 are arranged along the first direction. An insulating material is disposed on an outer surface of the first component 30, the first component includes a base portion 31, the base portion 31 is disposed on a side of the third component 70, the side of the third component 70 being a side facing away from the cell housing 211, and along the first direction X, the first component 30 includes a second through hole 312 extending through the base portion 31. The second limiting portion 34 is disposed on a side of the base portion 31, the side of the base portion 31 being a side facing the cell housing 211, and the second limiting portion 34 includes a third opening 303. The conductive assembly 110 is connected to the cell assembly 20, a portion of the conductive assembly 110 is disposed in the second limiting portion 34, and the conductive assembly 110 is led out from the third opening and the second through hole 312. At least a portion of the second insulation member 90 is disposed in a gap between the second limiting portion 34 and the conductive assembly 110.

The second insulation member 90 is configured to be formed by curing a second insulating material disposed in the gap between the conductive assembly 110 and the second limiting portion 34. The second limiting portion 34 can limit the overflow of the second insulating material from the second limiting portion 34.

In this application, the second insulation member 90 enhances the insulation and fixation of the conductive assembly 110, helping to further improve the safety performance of the battery module 100.

It can be understood that other structures of the battery module 100 in this embodiment are the same as those of the battery module 100 in the foregoing embodiments, and details are not repeated herein.

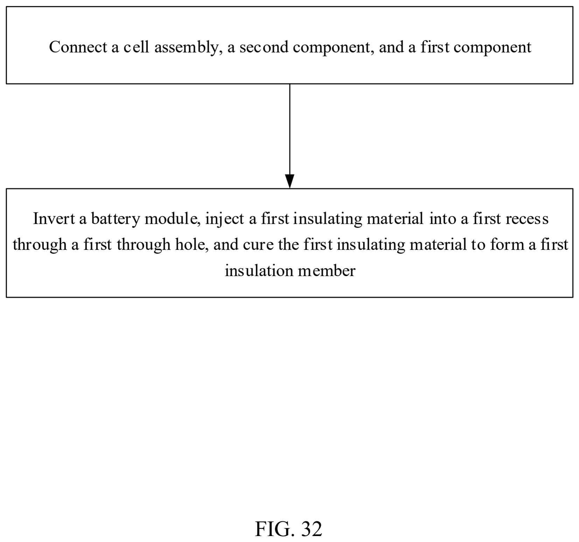

Referring to FIG. 32, this application further provides a method for manufacturing the foregoing battery module 100, including the following steps:
step 1. connecting the cell assembly 20, the second component 40, and the first component 30; and
step 2. inverting the battery module, injecting the first insulating material into the first recess 301 through the first through hole 401, and curing the first insulating material to form the first insulation member 50.

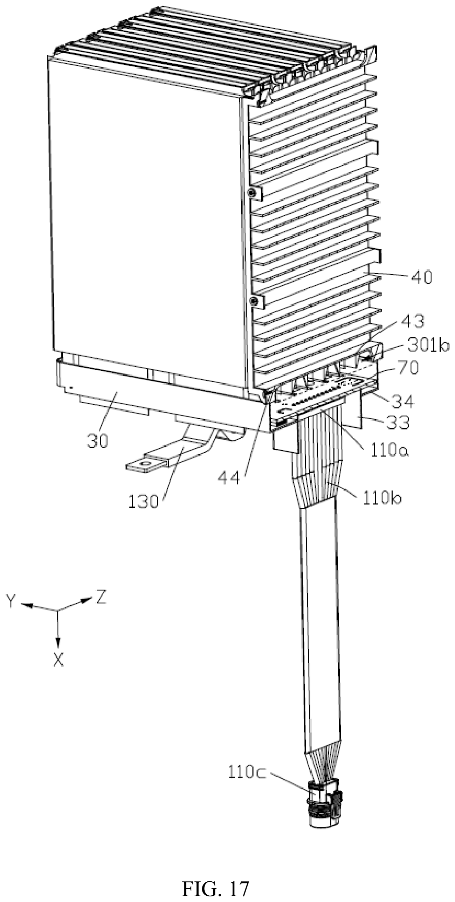

Referring to FIG. 17, inverting the battery module 100 includes arranging the battery module 100 along a direction opposite to the first direction X.

Referring to FIG. 1 to FIG. 3, in some embodiments, step 1 specifically includes: installing the second component 40 between the first group of cells 201 and the second group of cells 202, disposing the first opening 301a of the first component 30 facing the cell assembly 20, and disposing a portion of the electrode terminal 212 of the cell assembly 20 in the first recess 301.

Referring to FIG. 1 to FIG. 3, FIG. 11, FIG. 14, and FIG. 15, in some embodiments, after step 1, the method further includes: closing the first component 30, which specifically includes: injecting a second insulating material into the second limiting portion 34 and the first limiting portion 33, curing the second insulating material to form the second insulation member 90, extending the first electrical connection member 120 from the fourth opening 304, injecting a fourth insulating material into the fourth limiting portion 36 and the third limiting portion 35, curing the fourth insulating material to form the fourth insulation member 91, extending the second electrical connection member from the sixth opening 306, injecting a fifth insulating material into the sixth limiting portion 38 and the fifth limiting portion 37, and curing the fifth insulating material to form the fifth insulation member 92.

Referring also to FIG. 16, in some embodiments, step 2 specifically includes: inverting the battery module 100, putting an external device into the first recess 301 through the first through hole 401, injecting the first insulating material into the first recess 301, and curing the first insulating material to form the first insulation member 50.

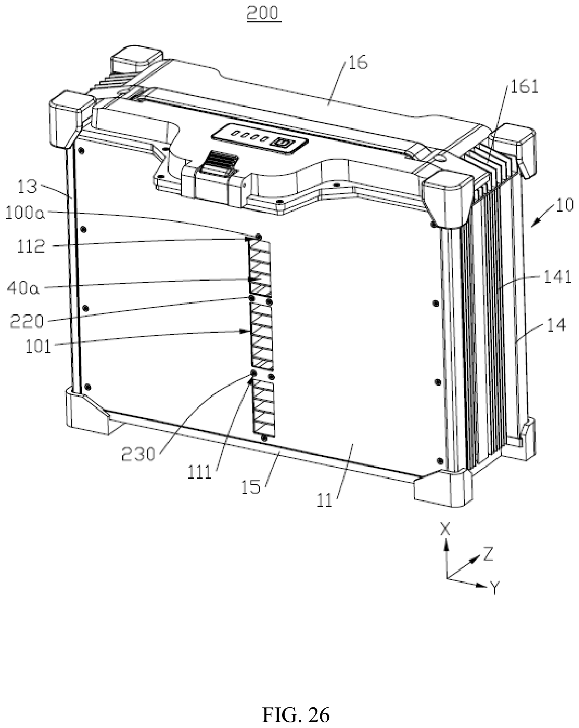

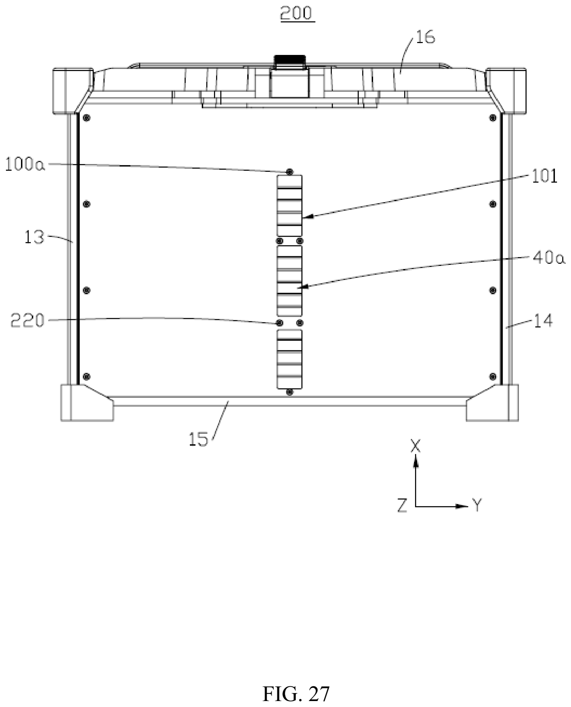

Referring to FIG. 26 to FIG. 31, another embodiment of this application provides a battery pack 200 including the battery module 100 according to any one of the above embodiments. The battery pack 200 includes a housing 10 and a top cover 16. The top cover 16 is connected to the housing 10 to form an accommodating space, and the battery module 100 is disposed in the accommodating space.

In some embodiments, the cell assembly 20 and the top cover 16 are arranged along the first direction X. Along the first direction X, the second component 40 does not extend beyond the housing 10.

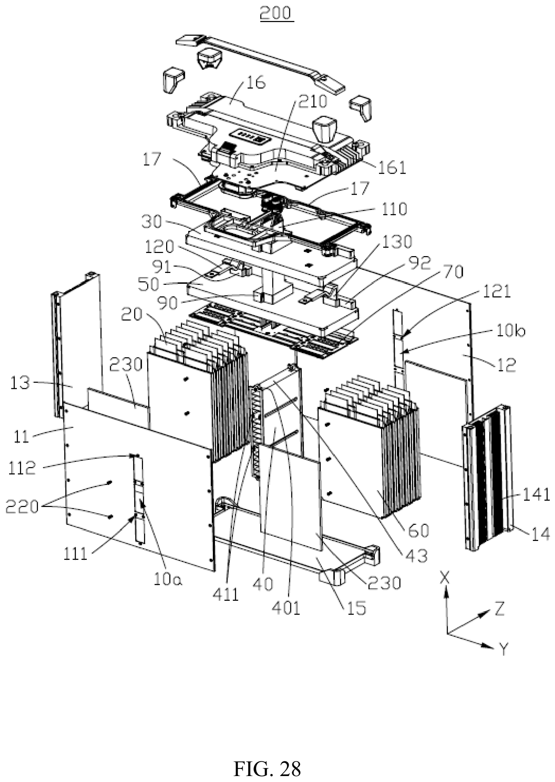

Referring to FIG. 28, in some embodiments, the battery pack 200 includes a housing 10. The housing 10 includes a housing front wall 11, a housing rear wall 12, a housing left wall 13, a housing right wall 14, and a housing bottom wall 15. The housing left wall 13 and the housing right wall 14 are arranged along a second direction Y, and the housing front wall 11 and the housing rear wall 12 are arranged along a third direction Z. The housing front wall 11 is connected to the housing left wall 13 and the housing right wall 14, the housing rear wall 12 is connected to the housing left wall 13 and the housing right wall 14, the housing bottom wall 15 is connected to the housing front wall 11, the housing rear wall 12, the housing left wall 13, and the housing right wall 14, and the top cover 16 is connected to the housing front wall 11, the housing rear wall 12, the housing left wall 13, and the housing right wall 14 to form the accommodating space. Optionally, the cell assembly 20, the second component 40, the first component 30, and the first insulation member 50 are all accommodated in the accommodating space.

In some embodiments, along the first direction X, the second component 40 does not extend beyond any one of the housing front wall 11, the housing rear wall 12, the housing left wall 13, and the housing right wall 14.

In some embodiments, the battery pack 200 includes a bracket 17, and the bracket 17 is connected to the housing front wall 11, the housing rear wall 12, the housing left wall 13, and the housing right wall 14. The bracket 17 and the top cover 16 are arranged along the first direction X, and the top cover 16 is connected to the bracket 17.

In some embodiments, at least one of the housing front wall 11, the housing rear wall 12, the housing left wall 13, the housing right wall 14, the housing bottom wall 15, or the top cover 16 includes a thermally conductive material, which can improve heat dissipation performance. Optionally, the housing front wall 11, the housing rear wall 12, the housing left wall 13, the housing right wall 14, the housing bottom wall 15, and the top cover 16 each include a thermally conductive metal material and a thermally conductive insulating material, and the insulating material may cover an outer surface of the thermally conductive metal material. Optionally, the thermally conductive metal material includes aluminum.

Referring to FIG. 28 and FIG. 29, in some embodiments, at least one of the housing front wall 11, the housing rear wall 12, the housing left wall 13, the housing right wall 14, the housing bottom wall 15, or the top cover 16 is provided with a heat sink, further improving the heat dissipation performance.

Optionally, along the second direction Y, the housing left wall 13 is provided with a first heat sink 131 on a side facing away from the housing right wall 14, and the housing right wall 14 is provided with a second heat sink 141 on a side facing away from the housing left wall 13. Optionally, the top cover 16 is provided with a third heat sink 161.

Referring to FIG. 26 to FIG. 28, in some embodiments, the housing 10 includes a housing opening 101, and the housing opening 101 includes a first housing opening 10a and a second housing opening 10b. The first housing opening 10a extends through the housing front wall 11, and the second housing opening 10b extends through the housing rear wall 12. The first heat dissipation channel 40a is in communication with the first housing opening 10a and the second housing opening 10b, and the first heat dissipation channel 40a is in communication with the outside through the first housing opening 10a and the second housing opening 10b.

It can be understood that according to a moving direction of the battery pack 200, the first housing opening 10a can serve as an air inlet or an air outlet. When the first housing opening 10a can serve as an air inlet, the second housing opening 10b serves as an air outlet. When the first housing opening 10a can serve as an air outlet, the second housing opening 10b serves as an air inlet.

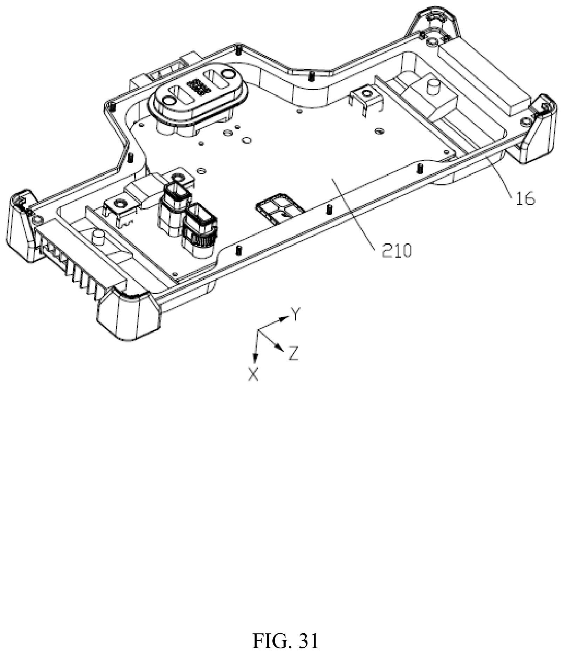

Referring to FIG. 28 and FIG. 31, in some embodiments, the battery pack 200 includes a second circuit board 210, and the second circuit board 210 is connected to the top cover 16. The second connecting portion 110c is connected to the second circuit board 210, and can transmit collected information to the second circuit board 210.

Optionally, the second circuit board 210 includes a BMS component (Battery Management System), and the BMS component includes a plurality of electronic components. The plurality of electronic components can implement functions such as control, protection, communication, power calculation, signal transmission, and power transmission for the cell 21.

Optionally, the second circuit board 210 includes a flexible printed circuit (FPC, Flexible Printed Circuit). Optionally, the second circuit board 210 includes a printed circuit board (PCB, Printed Circuit Board), and a plurality of wires (not shown in the figures) are disposed on the second circuit board 210.

Referring to FIG. 26 to FIG. 28, in some embodiments, the front wall 41 is connected to the housing front wall 11, and the rear wall 42 is connected to the housing rear wall 12.

In some embodiments, the battery pack 200 further includes a first fixing member 220, a first open hole 111 is disposed in the housing front wall 11, a second open hole 411 is disposed in the front wall 41, and the first fixing member 220 runs through the first open hole 111 and is connected to the second open hole 411, to fix the front wall 41 to the housing front wall 11. Optionally, the first fixing member 220 includes a screw.

In some embodiments, the battery module 100 further includes a second fixing member (not shown in the figures), a third open hole 121 is disposed in the housing rear wall 12, a fourth open hole 421 is disposed in the rear wall 42, and the second fixing member runs through the third open hole 121 and is connected to the fourth open hole 421, to fix the rear wall 42 to the housing rear wall 12. Optionally, the second fixing member includes a screw.

In some embodiments, the battery module 100 further includes a second sealing member (not shown in the figures), the second sealing member is disposed between the housing front wall 11 and the front wall 41, and the second sealing member connects the housing front wall 11 and the front wall 41, which can increase the sealing performance between the housing front wall 11 and the front wall 41. Optionally, the second sealing member is bonded to the housing front wall 11 and the front wall 41. Optionally, the second sealing member includes a foam. Optionally, the second sealing member includes a sealing adhesive.

In some embodiments, the battery module 100 further includes a third sealing member (not shown in the figures), the third sealing member is arranged between the housing rear wall 12 and the rear wall 42, and the third sealing member connects the housing rear wall 12 and the rear wall 42, which can increase the sealing performance between the housing rear wall 12 and the rear wall 42. Optionally, the third sealing member is bonded to the housing rear wall 12 and the rear wall 42. Optionally, the third sealing member includes a foam. Optionally, the third sealing member includes a sealing adhesive.

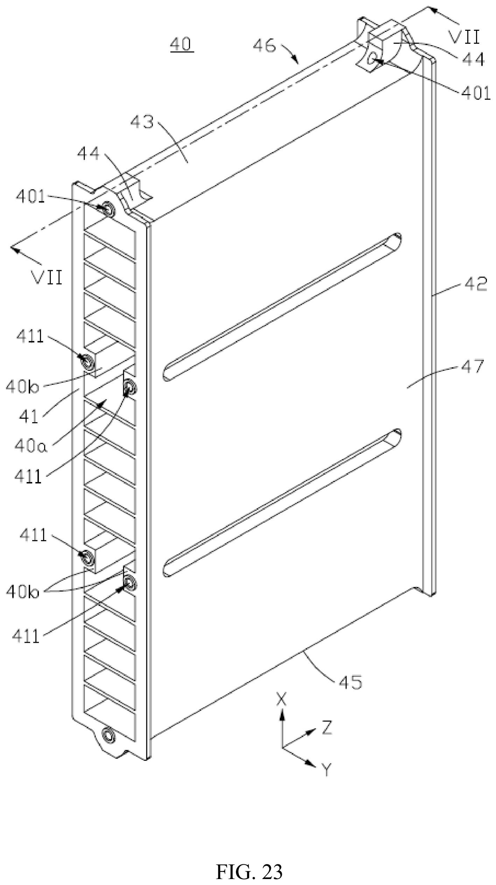

Referring to FIG. 23 to FIG. 28, in some embodiments, a first fixing hole 112 is disposed in the housing front wall 11, and the first fixing hole 112 extends through the housing front wall 11. The first fixing hole 112 is in communication with the first through hole 401. After the first insulation member 50 is disposed in the first recess 301, the first through hole 401 can be used to discharge gas from the battery module 100, achieving pressure balance between the inside and outside of the battery module 100, and improving the safety of the battery module 100.

In some embodiments, the battery pack 200 further includes a first fastener 100a, and the first fastener 100a is disposed in the first fixing hole 112 and the first through hole 401, which can close the first through hole 401 to reduce the entry of impurities such as dust into the first recess 301 through the first through hole 401, and can also connect the second component 40 to the housing front wall 11. Optionally, the first fastener 100a includes a screw.

It can be understood that when gas needs to be discharged, the first fastener 100a can be removed. After gas is discharged, the first fastener 100a can be disposed in the first through hole 401 to close the first through hole 401 again, reducing the entry of impurities such as dust into the battery module 100.

In some embodiments, the first through hole 401 and the first insulation member 50 are spaced apart from each other, facilitating the connection of the first fastener 100a to the first through hole 401.

In some embodiments, the battery pack 200 includes a sealing member, and the sealing member is disposed in the first through hole 401, reducing the entry of impurities such as dust into the first recess 301 through the first through hole 401. Optionally, the sealing member includes a sealing adhesive.

In some embodiments, the battery pack 200 includes a waterproof vent valve (not shown in the figures), and the waterproof vent valve closes the first fixing hole 112. The waterproof vent valve can prevent external impurities from entering the first recess 301, and can be used to discharge gas from the battery module 100.

In some embodiments, the second component 40 includes a protrusion 40b, the protrusion 40b is disposed in the first heat dissipation channel 40a, and the protrusion 40b extends along the third direction Z. Along the third direction Z, one end face of the protrusion 40b is coplanar with the front wall 41, and the other end face is coplanar with the rear wall 42. The second open hole 411 is disposed on one end face, and the fourth open hole 421 is disposed on the other end face. The second open hole 411 and the fourth open hole 421 are arranged along the third direction Z.

In some embodiments, the protrusion 40b is disposed on a side surface of the left wall 46, the side surface of the left wall 46 being a side surface facing the right wall 47. In some embodiments, the protrusion 40b is disposed on a side surface of the right wall 47, the side surface of the right wall 47 being a side surface facing the left wall 46. In some embodiments, the protrusions 40b are disposed on surfaces of the left wall 46 and the right wall 47 facing each other.

Referring to FIG. 6, FIG. 7, FIG. 29, and FIG. 30, in some embodiments, the heat conducting member 60 includes a first portion 61 and two second portions 62, and the two second portions 62 are connected to two sides of the first portion 61 along the second direction Y. The first portion 61 is connected to the main body front wall 2105 or the main body rear wall 2106. When the battery module 100 is disposed in the accommodating space, along the second direction Y, one of the second portions 62 is disposed between the main body left wall 2101 and the housing left wall 13, and the other second portion 62 is disposed between the main body right wall 2102 and the left wall 46. The heat of the main body front wall 2105 or the main body rear wall 2106 is conducted to the housing left wall 13 and the left wall 46 through the second portion 62, further facilitating heat dissipation.

In some embodiments, one of the second portions 62 is connected to the housing left wall 13, and the other second portion is connected to the left wall 46, facilitating heat dissipation.

In some embodiments, the battery module 100 includes a first heat conducting adhesive (not shown in the figures), one of the second portions 62 is connected to the housing left wall 13 through the first heat conducting adhesive, and the other second portion 62 is connected to the left wall 46 through the first heat conducting adhesive, facilitating heat dissipation.

In some embodiments, the heat conducting member 60 includes a third portion 63, and the third portion 63 is connected to the first portion 61. The second portion 62 is disposed between the housing bottom wall 15 and the main body bottom wall 2103, and the third portion 63 is connected to the housing bottom wall 15. The heat of the main body front wall 2105 or the main body rear wall 2106 is conducted to the housing bottom wall 15 through the third portion 63, further facilitating heat dissipation.

In some embodiments, the third portion 63 is connected to the housing bottom wall 15 through the first heat conducting adhesive, facilitating heat dissipation.

In some embodiments, along the third direction Z, the heat conducting members 60 are disposed on two sides of each main body portion 211a. The two second portions 62 on a same side as the two heat conducting members 60 are located between the housing left wall 13 and the main body left wall 2101, and these two second portions 62 are connected to the housing left wall 13. The two second portions 62 on a same side as the two heat conducting members 60 are located between the main body right wall 2102 and the left wall 46, and these two second portions 62 are connected to the left wall 46. The two third portions 63 on a same side as the two heat conducting members 60 are located between the housing bottom wall 15 and the main body bottom wall 2103, and these two third portions 63 are connected to the housing bottom wall 15. The second portion 62 connects the housing left wall 13 and the left wall 46, and the third portion 63 is connected to the housing bottom wall 15. Both the second portion 62 and the third portion 63 can conduct the heat of the main body portion 211a, further improving the heat dissipation efficiency.

Referring to FIG. 6 and FIG. 7, in some embodiments, when the cell 21 is not connected to the heat conducting member 60, the second portion 62 of the heat conducting member 60 is configured to be disposed along a direction leaving the first portion 61, so that the second portion 62 is inclined relative to the first portion 61, forming an obtuse angle α between the second portion 62 and the first portion 61. When the cell 21 is placed in the heat conducting member 60, the cell 21 can slide in along an inclined surface of the second portion 62 and is connected to the first portion 61, which can reduce the risk of the second portion 62 scratching the cell housing 211, and facilitate the installation of the cell 21.

In some embodiments, the two second portions 62 of the heat conducting member 60 are configured to be arranged in a direction leaving the first portion 61, so that the two second portions 62 are along an expanded shape. The cell 21 slides in along the inclined surfaces of the two second portions 62 and is connected to the first portion 61. When the cell assembly 20, the second component 40, and the heat conducting member 60 are installed in the housing 10, the housing left wall 13 and the left wall 46 can press the obliquely disposed second portion 62, making the second portion 62 close to the first portion 61 and approximately parallel to the surface of the housing left wall 13. Optionally, after the assembly is complete, the second portion 62 is perpendicular to the first portion 61. This not only reduces the risk of scratching the cell housing 211 and facilitate installation of the cell 21, but also reduces the space reserved for installing the cell 21, which is conducive to reducing the size of the heat conducting member 60 and further reducing the space occupied by the heat conducting member 60, thereby improving space utilization.

In some embodiments, before the assembly, a first angle A at which the second portion 62 is folded relative to the first portion 61 satisfies 3°≤A≤20°, where A may be any one of 3°, 4°, 5°, 6°, 7°, 8°, 9°, 10°, 11°, 12°, 13°, 14°, 15°, 16°, 17°, 18°, 19°, and 20°.

Referring to FIG. 3, FIG. 28, and FIG. 29, in some embodiments, the battery module 100 includes a first elastic member 230. The first elastic member 230 is disposed between the housing front wall 11 and the first portion 61 connected to the first cell 21a, and can provide a swelling space for the cell 21, can reduce the heat dissipation by the first portion 61 connected to the first cell 21a through the housing front wall 11, and reduce the temperature difference between the plurality of cells 21, helping to improve the performance of the battery pack 200.

In some embodiments, the first elastic member 230 is disposed between the housing rear wall 12 and the first portion 61 connected to the second cell 21b, and can provide a swelling space for the cell 21, and can reduce the heat dissipation by the first portion 61 connected to the second cell 21b through the housing rear wall 12, and reduce the temperature difference between the plurality of cells 21, further helping to improve of the performance of the battery pack 200. Optionally, the first elastic member 230 includes a foam.

Referring to FIG. 3, in some embodiments, the battery module 100 includes a second elastic member 240, and the second elastic member 240 is disposed between adjacent first portions 61, and can provide a swelling space for the cell 21. Optionally, the second elastic member 240 includes a foam.

Referring to FIG. 28, in some embodiments, after the battery module 100 is assembled, the battery module 100 is installed in the housing, the conductive assembly 110, the first electrical connection member 120, and the second electrical connection member 130 are connected to the second circuit board 210, and then the bracket 17 and the top cover 16 are installed.

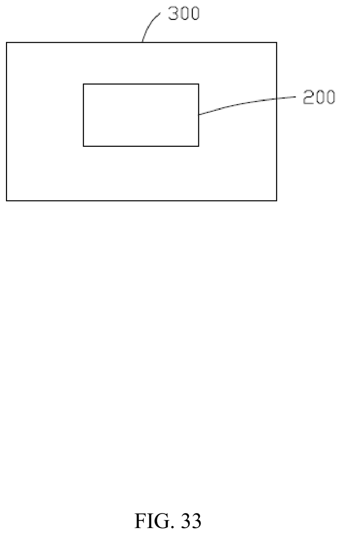

Referring to FIG. 33, this application further provides an electric device 300 using the foregoing battery pack 200. In an embodiment, the electric device 300 in this application may be but is not limited to an electronic device, a drone, a backup power source, an electric vehicle, an electric motorcycle, an electrically power assisted cycle, an electric tool, and a large household battery module.

Those of ordinary skill in the art should appreciate that the foregoing embodiments are for description of this application only but not for limiting this application. Appropriate modifications and variations made to the foregoing embodiments without departing from the essential spirit and scope of this application all fall within the scope of this application.

## Claims

1. A battery module, comprising:
a cell assembly comprises a plurality of cells, and each cell comprises a cell housing and an electrode terminal, the electrode terminal extends out from the cell housing;
a first component, the cell assembly and the first component are arranged along a first direction, the first component has a first recess, and a portion of each electrode terminal is disposed in the first recess;
a first insulation member, at least a portion of the first insulation member is disposed in a gap between the electrode terminal and the first component; and
a second component provided with a first through hole, the second component and the first component are arranged along the first direction;
the first recess comprises a first opening facing the second component; and along the first direction, a projection of the first through hole overlaps with a projection of the first opening.

2. The battery module according to claim 1, wherein the second component comprises a top wall and a protrusion, the first through hole extends through the protrusion, and along the first direction, the protrusion extends away from the top wall; and
along the first direction, a first space is provided between the top wall and the first opening.

3. The battery module according to claim 2, wherein the protrusion is located outside the first recess.

4. The battery module according to any one of claims 1 to 3, wherein the first through hole is located outside the first recess.

5. The battery module according to any one of claims 1 to 4, wherein the first through hole and the first insulation member are spaced apart from each other.

6. The battery module according to any one of claims 2 to 5, wherein each cell comprises an electrode assembly, and the cell housing comprises a main body portion and a sealing portion, the electrode assembly is disposed in the main body portion; wherein
the sealing portion comprises a first sealing portion, the electrode terminal is connected to the electrode assembly and led out from the first sealing portion, and at least a portion of each first sealing portion is located in the first recess; and
the first insulation member wraps the portion of each first sealing portion.

7. The battery module according to claim 6, wherein the second component and the plurality of cells are arranged in a second direction; and along the first direction, the protrusion extends beyond the main body portion, the second direction is perpendicular to the first direction.

8. The battery module according to claim 6, wherein along a third direction, the projection of the first through hole and a projection of the first sealing portion are spaced apart from each other, the first direction is perpendicular to the third direction.

9. The battery module according to claim 6, wherein the cell assembly comprises a first group of cells and a second group of cells, the first group of cells and the second group of cells are arranged along a second direction, and the second component is located between the first group of cells and the second group of cells;
the first group of cells comprises at least two cells stacked along a third direction, and the second group of cells comprises at least two cells stacked along the third direction; the first direction, the second direction, and the third direction are perpendicular to each other; and
along the second direction, at least a portion of the protrusion is located between the first sealing portion of the first group of cells and the first sealing portion ofthe second group of cells.

10. The battery module according to any one of claims 1 to 9, wherein the battery module further comprises a third component, wherein the electrode terminal runs through the third component and is connected to a side of the third component, the side of the third component being a side facing away from the cell housing; and
the first insulation member covers at least a portion of the third component.

11. The battery module according to claim 10, wherein the electrode terminal, the third component, and the first component are bonded by the first insulation member.

12. The battery module according to claim 10, wherein the battery module further comprises a first limiting portion;
the first component comprises a base portion, the first limiting portion is disposed on a side of the base portion, the side of the base portion being a side facing away from the third component, and the first limiting portion comprises a second opening;
the first component further comprises a second through hole, and the second through hole extends through the base portion along the first direction; and
the battery module further comprises a conductive assembly, the conductive assembly is connected to the third component, and the conductive assembly is led out from the second through hole and the second opening.

13. The battery module according to claim 12, wherein the battery module further comprises a second insulation member, and at least a portion of the second insulation member is disposed in a gap between the conductive assembly and the first limiting portion.

14. The battery module according to claim 13, wherein the battery module further comprises a second limiting portion, the second limiting portion is disposed on a side of the base portion, the side of the base portionbeing a side facing the third component;
the second limiting portion comprises a third opening, and the conductive assembly is led out from the third opening, the second through hole, and the second opening; and
at least a portion of the second insulation member is disposed in a gap between the second limiting portion and the conductive assembly.

15. The battery module according to claim 14, wherein the battery module comprises a first sealing member, and along the first direction, the first sealing member is located between the third component and the second limiting portion.

16. The battery module according to any one of claims 1 to 15, wherein an outer surface of the first component is insulative.

17. The battery module according to any one of claims 1 to 16, wherein the first component comprises a base portion and four first side walls, and the base portion and the four first side walls enclose the first recess.

18. The battery module according to claim 17, wherein the first opening is formed at an end of the four first side walls facing away from the base portion.

19. The battery module according to any one of claims 1 to 18, wherein the first insulation member is configured to be formed by curing a first insulating material.

20. The battery module according to any one of claims 1 to 19, wherein the first through hole is configured to provide the first insulating material to the first recess through the first through hole to form the first insulation member.

21. The battery module according to any one of claims 1 to 20, wherein the second component is a heat dissipation member, the heat dissipation member comprises a first heat dissipation channel, and the first heat dissipation channel is in communication with the outside.

22. The battery module according to claim 21, wherein the first through hole and the first heat dissipation channel are spaced apart from each other.

23. The battery module according to any one of claims 1 to 22, wherein along a direction opposite to the first direction, the first recess is facing the cell assembly.

24. A battery module, comprising:
a cell assembly, wherein the cell assembly comprises a plurality of cells, and each of the cells comprises a cell housing and an electrode terminal, the electrode terminal led out from the cell housing;
a first component, the cell assembly and the first component are arranged along a first direction, the first component has a first recess, and a portion of each electrode terminal is disposed in the first recess;
a first insulation member, at least a portion of the first insulation member is disposed in a gap between the electrode terminal and the first component; and
a second component, provided with a first through hole, wherein the second component and the first component are arranged along the first direction; and
the second component comprises a top wall and a protrusion, the first through hole extends through the protrusion, and along the first direction, the protrusion extends from the top wall;
the first recess comprises a first opening facing the second component, and along the first direction, a first space is provided between the top wall and the first opening; and
when viewed along a third direction, at least a portion of the first through hole is located within the first space, the third direction is perpendicular to the first direction.

25. The battery module according to claim 24, wherein the protrusion is located outside the first recess.

26. The battery module according to claim 24 or 25, wherein the first through hole is located outside the first recess.

27. The battery module according to any one of claims 24 to 26, wherein the first through hole and the first insulation member are spaced apart from each other.

28. The battery module according to any one of claims 24 to 27, wherein each of the cells comprises an electrode assembly, and the cell housing comprises a main body portion and a sealing portion, the electrode assembly disposed in the main body portion;
the sealing portion comprises a first sealing portion, the electrode terminal is connected to the electrode assembly and led out from the first sealing portion, and at least a portion of each first sealing portion is located in the first recess; and
the first insulation member wraps at least a portion of each first sealing portion.

29. The battery module according to claim 28, wherein the second component and the plurality of cells are arranged in a second direction, and along the first direction, the protrusion extends beyond the main body portion, the second direction is perpendicular to the first direction.

30. The battery module according to claim 28, wherein along the third direction, a projection of the first through hole and a projection of the first sealing portion are spaced apart from each other.

31. The battery module according to any one of claims 24 to 30, wherein the cell assembly comprises a first group of cells and a second group of cells, the first group of cells and the second group of cells are arranged along a second direction, and the second component is located between the first group of cells and the second group of cells;
the first group of cells comprises at least two cells stacked along the third direction, and the second group of cells comprises at least two cells stacked along the third direction, any two of the first direction, the second direction, and the third direction is perpendicular to each other; and
along the second direction, at least a portion of the protrusion is located between the first sealing portion for the first group of cells and the first sealing portion for the second group of cells.

32. The battery module according to any one of claims 24 to 31, wherein the battery module further comprises a third component, wherein the electrode terminal runs through the third component and is connected to a side of the third component, the side of the third component being a side facing away from the cell housing; and
the first insulation member covers at least a portion of the third component.

33. The battery module according to claim 32, wherein the electrode terminal, the third component, and the first component are bonded by the first insulation member.

34. The battery module according to claim 32, wherein the battery module further comprises a first limiting portion;
the first component comprises a base portion, the first limiting portion is disposed on a side of the base portion, the side of the base portion being a side facing away from the third component, and the first limiting portion comprises a second opening;
the first component further comprises a second through hole, and the second through hole extends through the base portion along the first direction; and
the battery module further comprises a conductive assembly, the conductive assembly is connected to the third component, and the conductive assembly is led out from the second through hole and the second opening.

35. The battery module according to claim 34, wherein the battery module further comprises a second insulation member, and at least a portion of the second insulation member is disposed in a gap between the conductive assembly and the first limiting portion.

36. The battery module according to claim 35, wherein the battery module further comprises a second limiting portion, wherein the second limiting portion is disposed on a side of the base portion facing the third component;
the second limiting portion comprises a third opening, and the conductive assembly is led out from the third opening, the second through hole, and the first limiting portion; and
at least a portion of the second insulation member is disposed in a gap between the second limiting portion and the conductive assembly.

37. The battery module according to claim 36, wherein the battery module comprises a first sealing member, and along the first direction, the first sealing member is located between the third component and the second limiting portion.

38. The battery module according to any one of claims 24 to 37, wherein an outer surface of the first component is insulative.

39. The battery module according to any one of claims 24 to 38, wherein the first component comprises a base portion and four first side walls, and the base portion and the four first side walls enclose the first recess.

40. The battery module according to claim 39, wherein the first opening is formed at an end of the four first side walls facing away from the base portion.

41. The battery module according to any one of claims 24 to 40, wherein the first insulation member is configured to be formed by curing a first insulating material.

42. The battery module according to any one of claims 24 to 41, wherein the first through hole is configured to provide the first insulating material to the first recess through the first through hole to form the first insulation member.

43. The battery module according to any one of claims 24 to 42, wherein the second component is a heat dissipation member, the heat dissipation member comprises a first heat dissipation channel, and the first heat dissipation channel is in communication with the outside.

44. The battery module according to claim 43, wherein the first through hole and the first heat dissipation channel are spaced apart from each other.

45. The battery module according to any one of claims 24 to 44, wherein along a direction opposite to the first direction, the first recess is facing the cell assembly.

46. A battery pack, comprising the battery module according to any one of claims 1 to 23 or the battery module according to any one of claims 24 to 45, a housing, and a top cover; wherein the housing and the top cover form an accommodating space, and the battery module is located within the accommodating space.

47. The battery pack according to claim 46, wherein the battery pack further comprises a second circuit board, and the second circuit board is electrically connected to the cell assembly.

48. The battery pack according to claim 47, wherein the cell assembly and the top cover are arranged along the first direction; and
along the first direction, the second component does not extend beyond the housing.

49. The battery pack according to any one of claims 46 to 48, wherein the battery pack further comprises a first fastener, the housing is provided with a first fixing hole, and the first fastener is disposed in the first fixing hole and the first through hole.

50. The battery pack according to any one of claims 46 to 48, wherein the battery pack comprises a sealing member, and the sealing member is disposed in the first through hole.

51. An electric device, comprising the battery pack according to any one of claims 46 to 50.

52. A method for manufacturing the battery module according to any one of claims 1 to 23 or the battery module according to any one of claims 24 to 45, comprising the following steps:
connecting the cell assembly, the second component, and the first component; and
inverting the battery module, injecting the first insulating material into the first recess through the first through hole, and curing the first insulating material to form the first insulation member.
